(19) Europäisches Patentamt
European Patent Office
Office européen des brevets

(11) EP 4 721 985 A1

(12) **EUROPEAN PATENT APPLICATION**

(43) Date of publication:
**08.04.2026 Bulletin 2026/15**

(21) Application number: **25206310.2**

(22) Date of filing: **02.10.2025**

(51) International Patent Classification (IPC):
***B41J 2/16** (2006.01)* ***C08G 59/24** (2006.01)*
***C08G 59/62** (2006.01)* ***C08G 59/68** (2006.01)*
***C08K 5/17** (2006.01)* ***C08L 63/00** (2006.01)*
***C09J 163/00** (2006.01)*

(52) Cooperative Patent Classification (CPC):
**B41J 2/1623; C08G 59/245; C08G 59/621; C08G 59/686; C08K 5/17; C08L 63/00; C09J 163/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.10.2024 JP 2024173301**

(71) Applicant: **Seiko Epson Corporation**
**Tokyo 160-8801 (JP)**

(72) Inventors:
- **KOGANEHIRA, Shuichi**
  **Suwa-shi, 392-8502 (JP)**
- **TANAKA, Masako**
  **Suwa-shi, 392-8502 (JP)**
- **TSUKADA, Kenta**
  **Suwa-shi, 392-8502 (JP)**
- **YAMADA, Minoru**
  **Suwa-shi, 392-8502 (JP)**

(74) Representative: **Lewis Silkin LLP**
**Arbor**
**255 Blackfriars Road**
**London SE1 9AX (GB)**

(54) **LIQUID EJECTING HEAD AND ONE-LIQUID TYPE GLUE**

(57) A liquid ejecting head configured to eject a liquid from a nozzle includes a first member, a second member, and a cured substance of a one-liquid type glue that bonds the first member and the second member to each other, in which the one-liquid type glue contains an epoxy resin containing no bisphenol, a curing agent containing a polymer of an aromatic amine, and an alkylphenol, and the alkylphenol is an alkylphenol (a) containing at least one ethyl group or an alkylphenol (b) in which an alkyl group has 1 to 3 carbon atoms and which contains at least one methyl group and one isopropyl group.

FIG. 1

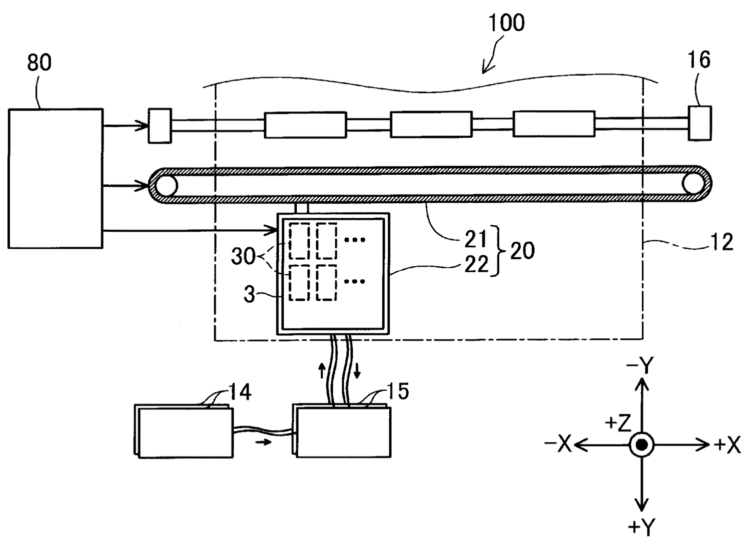




Processed by Luminess, 75001 PARIS (FR)

## Description

The present application is based on, and claims priority from JP Application Serial Number 2024-173301, filed October 2, 2024, the disclosure of which is hereby incorporated by reference herein in its entirety.

## BACKGROUND

### 1. Technical Field

The present disclosure relates to a liquid ejecting head and a one-liquid type glue.

### 2. Related Art

In the related art, an epoxy resin is used for producing a liquid ejecting head. For example, JP-A-2002-155129 describes that inkjet constituent members are bonded to each other using an epoxy resin composition. When an epoxy resin is used for bonding constituent members that are in contact with an ink among constituent members of a liquid ejecting head, the epoxy resin is required to have sufficient resistance to the properties of the ink such as acidity and to have satisfactory adhesiveness. JP-A-2002-155129 describes that the epoxy resin composition may be configured to contain a liquid epoxy resin, a liquid curing agent, and a curing accelerator, an aliphatic amine can be used as the liquid curing agent, and a phenol such as nonylphenol can be used as the curing accelerator.

However, nonylphenol described as an example of the curing accelerator is an endocrine disruptor, which is not preferable. In addition, when an aliphatic amine is used, the resistance to the properties of an ink such as acid resistance of the epoxy resin may be insufficient.

## SUMMARY

According to an aspect of the present disclosure, there is provided a liquid ejecting head that ejects a liquid from a nozzle. The liquid ejecting head includes a first member; a second member; and a cured substance of a one-liquid type glue that bonds the first member and the second member, in which the one-liquid type glue contains an epoxy resin containing no bisphenol, a curing agent containing a polymer of an aromatic amine, and an alkylphenol, and the alkylphenol is an alkylphenol (a) containing at least one ethyl group or an alkylphenol (b) in which an alkyl group has 1 to 3 carbon atoms and which contains at least one methyl group and one isopropyl group.

## BRIEF DESCRIPTION OF THE DRAWINGS

FIG. 1 is a schematic view showing a schematic configuration of a liquid ejecting apparatus according to an embodiment.

FIG. 2 is a perspective view showing a head module.

FIG. 3 is an exploded perspective view showing a liquid ejecting head.

FIG. 4 is a cross-sectional view showing an ejecting unit.

FIG. 5 is a view showing a process of curing a glue.

FIG. 6 is a view showing a list of components used in tests.

FIG. 7 is a view showing chemical structural formulae from Chemical Formula (f1) to Chemical Formula (f3).

FIG. 8 is a view for explaining Evaluation A.

FIG. 9 is a view for explaining Evaluation C.

FIG. 10 is a table showing equivalent ratios, mass ratios, and evaluation results of Test 1.

FIG. 11 is a table showing equivalent ratios, mass ratios, and evaluation results of Test 2.

FIG. 12 is a table showing equivalent ratios and mass ratios of Test 3.

FIG. 13 is a table showing evaluation results of Tests 3 and 4.

FIG. 14 is a table showing equivalent ratios and mass ratios of Test 4.

FIG. 15 is a table showing equivalent ratios, mass ratios, and evaluation results of Test 5.

FIG. 16 is a table showing equivalent ratios, mass ratios, and evaluation results of Test 6.

FIG. 17 is a table showing equivalent ratios and mass ratios of Test 7.

FIG. 18 is a table showing evaluation results of Tests 7 and 8.

FIG. 19 is a table showing equivalent ratios and mass ratios of Test 8.

FIG. 20 is a table showing equivalent ratios, mass ratios, and evaluation results of Test 9.

## DESCRIPTION OF EMBODIMENTS

### A. Embodiment:

### A1. Overall configuration of liquid ejecting apparatus:

FIG. 1 is a schematic view showing a schematic configuration of a liquid ejecting apparatus 100 according to an embodiment. The liquid ejecting apparatus 100 is an ink jet type printing device that performs printing by ejecting ink droplets as a liquid onto a medium 12. A printing target made of any material such as a resin film or cloth can be employed as the medium 12 in addition to printing paper. In the following description, an X direction, a Y direction, and a Z direction that are orthogonal to each other are used. Further, when the orientation is specified, the positive direction is defined as "+" and the negative direction is defined as "-", and the positive and negative signs are used in combination in the direction notation. In the present embodiment, the X direction is a main scanning direction which is a moving direction of a liquid ejecting head 30. The Y direction is a sub-scanning direction which is a medium feeding direction orthogonal to the main scanning direction. The -Z direction is an ejection direction of an ink. In the following description, the +Z direction may be referred to as upward, and the -Z direction may be referred to as downward.

The liquid ejecting apparatus 100 includes a head module 3, a head moving mechanism 20, a plurality of liquid accommodating portions 14, a plurality of sub-tanks 15, a transport mechanism 16, and a controller 80. The head module 3 has a plurality of liquid ejecting heads 30.

Each liquid accommodating portion 14 accommodates an ink to be supplied to the head module 3. As the liquid accommodating portion 14, a bag-shaped liquid pack formed of a flexible film, an ink tank that can replenish an ink, a detachable ink cartridge, and the like can be used.

A colored ink containing a coloring material, a treatment ink for enhancing the fixing performance of the colored ink with respect to the medium 12, or the like can be used as the ink. As the coloring material contained in the colored ink, a pigment or a dye can be used. The colored ink contains a coloring material, a dispersant for dispersing the coloring material, and other components such as glycol ether.

The components contained in the treatment ink are adjusted depending on the kind of the medium 12. For example, when printed book paper such as art paper or coated paper is used as the medium 12, the treatment ink is configured to contain an aggregating agent for aggregating a dye or a pigment, which is a coloring material of the colored ink. An organic acid such as citric acid, malic acid, or malonic acid, a cationic compound, or the like can be used as the aggregating agent. In addition, the treatment ink contains, in addition to the aggregating agent, an organic solvent such as a surfactant or an alkanediol. The printed book paper is unlikely to absorb a liquid. Therefore, when the treatment ink is used, the components contained in the treatment ink react with the components contained in the colored ink, and thus the fixing performance and color developability of the colored ink can be enhanced. In addition, bleeding can be suppressed by allowing the colored ink to contain glycol ether.

Each of the sub-tanks 15 is coupled to the liquid accommodating portion 14 by a tube through which the ink is circulated. In addition, each of the sub-tanks 15 is coupled to the head module 3 by a first tube for supplying ink to the head module 3 and a second tube for returning the ink from the liquid ejecting head 30 to the sub-tank 15. The ink is supplied to

each of the sub-tanks 15 from the liquid accommodating portion 14, and the ink is returned from the head module 3. Further, the ink circulates between the sub-tank 15 and the head module 3.

In the following description, a case where the liquid ejecting apparatus 100 includes two liquid accommodating portions 14 and two sub-tanks 15 will be described as an example. In the present embodiment, inks of different colors are accommodated in each of the two liquid accommodating portions 14. In order to distinguish between these two inks, the ink accommodated in one liquid accommodating portion 14 is referred to as a first ink, and the ink accommodated in the other liquid accommodating portion 14 is referred to as a second ink. Further, the liquid ejecting apparatus 100 may include one or three or more liquid accommodating portions 14. In addition, the inks accommodated in each of the two liquid accommodating portions 14 may be inks of the same color.

The head module 3 has a plurality of nozzles N (described below) for ejecting the ink. The head module 3 ejects the inks to be supplied from the liquid accommodating portions 14 from the plurality of nozzles N toward the medium 12.

The head moving mechanism 20 includes a transport belt 21 and a carriage 22 that accommodates the head module 3. The carriage 22 is coupled to the transport belt 21 and reciprocates in the X direction as the transport belt 21 is driven. The transport mechanism 16 transports the medium 12 in the +Y direction.

The controller 80 includes processing circuits such as one or a plurality of central processing units (CPUs) and field programmable gate arrays (FPGAs) and storage circuits such as a semiconductor memory, and controls the operation of the entire liquid ejecting apparatus 100. The controller 80 is electrically coupled to the transport mechanism 16, the head moving mechanism 20, and the liquid ejecting head 30, and controls each section. An image is printed on the medium 12 by ejecting the liquid from the nozzles N to the medium 12 transported by the transport mechanism 16.

FIG. 2 is a perspective view showing the head module 3. As shown in FIG. 2, the head module 3 includes a support 301 and a plurality of the liquid ejecting heads 30. In the present embodiment, the head module 3 includes eight liquid ejecting heads 30. Further, the number of liquid ejecting heads 30 included in the head module 3 is not limited to eight, and may be, for example, one.

The support 301 is a plate-shaped member that supports the plurality of liquid ejecting heads 30. The support 301 has a plurality of mounting holes 302. Each liquid ejecting head 30 is supported by the support 301 in a state of being fitted in the mounting hole 302. The plurality of liquid ejecting heads 30 are arranged in a matrix.

A2. Configuration of liquid ejecting head:

FIG. 3 is an exploded perspective view showing the liquid ejecting head 30. As shown in FIG. 3, the liquid ejecting head 30 includes a cover member 31, a holder member 32, a flow path structure 33, a fixing plate 36, a reinforcing plate 37, a plurality of ejecting units 26, a wiring substrate 381, a wiring member 382, a first circuit substrate 383u, and a second circuit substrate 383v. In the present embodiment, the liquid ejecting head 30 has four ejecting units 26.

The fixing plate 36 is a plate member for fixing the plurality of ejecting units 26 to the holder member 32. In the present embodiment, the material of the fixing plate 36 is stainless steel. The fixing plate 36 has a plurality of opening portions 361 for exposing the nozzles N formed at the lower surface of each ejecting unit 26.

The reinforcing plate 37 is a plate member for reinforcing the fixing plate 36. In the present embodiment, the material of the reinforcing plate 37 is stainless steel. The reinforcing plate 37 is fixed to the fixing plate 36 by a glue. Similar to the fixing plate 36, the reinforcing plate 37 has a plurality of opening portions 371 for exposing the nozzles N formed at the lower surface of each ejecting unit 26.

Each ejecting unit 26 has the above-described nozzles N and four through-holes 48a. The details of the ejecting unit 26 will be described below.

The holder member 32 includes a plurality of accommodating portions 321, a plurality of holder first through-holes 322, and a plurality of holder second through-holes 323. The material of the holder member 32 is, for example, a metal such as stainless steel. Each of the accommodating portions 321 is formed to protrude downward from a plate-shaped flange 324 of the holder member 32. The lower side of each accommodating portion 321 is open. Each accommodating portion 321 accommodates the ejecting unit 26. Each holder first through-hole 322 communicates with any one of the four through-holes 48a of each ejecting unit 26. Each holder second through-hole 323 is a through-hole for inserting a flexible substrate 51a described below.

The flow path structure 33 includes a laminate 333, an upper coupling portion 331a for first supply, an upper coupling portion 332a for first discharge, an upper coupling portion 331b for second supply, and an upper coupling portion 332b for second discharge. The laminate 333 is configured by laminating a plurality of flow path members Su. Each flow path member Su defines a flow path through which the ink flows.

The laminate 333 is configured by bonding two adjacent flow path members Su of the plurality of flow path members Su to each other with a glue. In the present embodiment, the material of each flow path member Su is a resin.

The laminate 333 is formed with four structure flow paths (not shown) for circulating the ink between the sub-tank 15 and the ejecting unit 26. Each structure flow path is configured by a groove formed at an upper surface or a lower surface of each flow path member Su and a through-hole penetrating in a thickness direction of each flow path member Su.

The upper coupling portion 331a for first supply, the upper coupling portion 332a for first discharge, the upper coupling portion 331b for second supply, and the upper coupling portion 332b for second discharge are provided on the upper surface of the laminate 333. Each of the upper coupling portion 331a for first supply, the upper coupling portion 332a for first discharge, the upper coupling portion 331b for second supply, and the upper coupling portion 332b for second discharge is coupled to any one of the four structure flow paths.

The wiring substrate 381 and the wiring member 382 are mounting components for electrically coupling the controller 80 and the ejecting unit 26. The wiring substrate 381 is formed with a wiring or the like. The wiring member 382 is a connector to which a signal cable (not shown) is coupled. Electronic circuits are formed at the first circuit substrate 383u and the second circuit substrate 383v. The first circuit substrate 383u and the second circuit substrate 383v are electrically coupled to the wiring substrate 381.

The cover member 31 accommodates a laminate 333, a wiring substrate 381, a wiring member 382, a first circuit substrate 383u, and a second circuit substrate 383. As the material of the cover member 31, for example, a resin or a metal can be used. The cover member 31 has two holes 311 for a first coupling portion, two holes 312 for a second coupling portion, and a first hole 313. The first hole 313 is a hole for inserting the wiring member 382. The upper coupling portion 331a for first supply or the upper coupling portion 331b for second supply is inserted into each of the two holes 311 for a first coupling portion. The upper coupling portion 332a for first discharge or the upper coupling portion 332b for second discharge is inserted into each of the two holes 312 for a second coupling portion.

Further, the material of the cover member 31 and the material of the holder member 32 are not limited to the description above. For example, the material of the holder member 32 may be a resin. Further, the material of the cover member 31 or the material of the holder member 32 may be, for example, carbon steel or a material obtained by combining a resin and a metal.

The laminate 333, the wiring member 382, the first circuit substrate 383u, and the second circuit substrate 383v are accommodated inside the cover member 31. The ejecting unit 26 is accommodated inside the holder member 32. Further, the fixing plate 36 and the reinforcing plate 37 are disposed on the lower side of the holder member 32. The reinforcing plate 37, the fixing plate 36, and the holder member 32 are bonded to each other by a glue. The ejecting unit 26 is fixed to the holder member 32 by bonding the fixing plate 36 that supports the ejecting unit 26 from below and the holder member 32 to each other. The cover member 31 accommodating each of the above-described components and the holder member 32 accommodating each of the above-described components are coupled to each other to assemble the liquid ejecting head 30.

A3. Configuration of ejecting unit:

FIG. 4 is a cross-sectional view showing the ejecting unit 26 shown together with the fixing plate 36, the reinforcing plate 37, and the holder member 32. As shown in FIG. 4, the ejecting unit 26 includes a nozzle plate 62, two flow path sealing members 64, a flow path substrate 53, a pressure chamber substrate 34, a vibration plate 54, a sealing body 46, a housing portion 48, and a flexible substrate 51a. The nozzle plate 62, the flow path sealing member 64, the flow path substrate 53, the pressure chamber substrate 34, the vibration plate 54, and the sealing body 46 are plate-shaped members elongated in the Y direction. Each of the nozzle plate 62, the flow path substrate 53, the pressure chamber substrate 34, the vibration plate 54, and the sealing body 46 has a substantially line-symmetrical structure with respect to the center line in the X direction. The size of the planar shape of the pressure chamber substrate 34, the vibration plate 54, and the sealing body 46 is less than the size of the planar shape of the flow path substrate 53 and the housing portion 48. In a case of assembly, the nozzle plate 62, the two flow path sealing members 64, the flow path substrate 53, the pressure chamber substrate 34, the vibration plate 54, the sealing body 46, and the housing portion 48 are laminated in this order, and are bonded to each other by the cured substance GL of a glue (not shown).

The nozzle plate 62 is a plate-shaped member in which the plurality of nozzles N are formed. The nozzles N are through-holes having a substantially circular plane shape. The plurality of nozzles N are arranged in the Y direction. Two rows in which the plurality of nozzles N are arranged are provided, and the two rows are formed side by side in the X direction. The two flow path sealing members 64 are disposed to sandwich the nozzle plate 62 in the X direction.

The flow path substrate 53 has two first opening portions 32a, a plurality of second opening portions 32b, and a plurality of third opening portions 32c. The planar shape of the first opening portion 32a is a rectangular shape elongated in the Y direction. The first opening portion 32a is formed along the side of the flow path substrate 53 parallel to the Y direction. The plurality of second opening portions 32b are arranged in the Y direction. Similarly, the plurality of third opening portions 32c are arranged in the Y direction. The number of rows of the second opening portion 32b and the number of rows of the third opening portion 32c are each two. The first opening portion 32a, the rows of one second opening portion 32b, the rows of one third opening portion 32c, the rows of one third opening portion 32c, the rows of one second opening portion 32b, and the first opening portion 32a are formed side by side in this order in the X direction. Further, the second opening portion 32b and the third opening portion 32c adjacent to each other in the X direction are formed to have substantially the same position in the Y direction.

The pressure chamber substrate 34 is formed with a plurality of opening portions 34a. The planar shape of the opening portion 34a is a rectangular shape elongated in the X direction. The plurality of opening portions 34a are arranged in the Y direction. Two rows in which the plurality of opening portions 34a are arranged are provided, and the two rows are formed side by side in the X direction. Further, the opening portion 34a is formed at a position overlapping the second opening portion 32b and the third opening portion 32c adjacent to each other and formed in the flow path substrate 53 as viewed in the Z direction.

The opening portion 34a formed in the pressure chamber substrate 34 and a piezoelectric element 44 formed at a position overlapping the opening portion 34a are formed at the vibration plate 54 as viewed in the Z direction. The sealing body 46 reinforces the strength of the pressure chamber substrate 34 and the vibration plate 54, and protects the piezoelectric element 44. The sealing body 46 has a sealing body opening portion 46a. The planar shape of the sealing body opening portion 46a is a rectangular shape elongated in the Y direction.

The first circuit substrate 383u or the second circuit substrate 383v is electrically coupled to the piezoelectric element 44 via the flexible substrate 51a.

The housing portion 48 is a case for storing the ink and has a frame shape. The material of the housing portion 48 is a resin. In a case of lamination, the pressure chamber substrate 34, the vibration plate 54, and the sealing body 46 are disposed in an internal space of the housing portion 48. A through-hole 48a is formed in each of both end portions of the housing portion 48 in the X direction.

A space Rb extending in the Y direction is formed at each of both end portions of the housing portion 48 in the X direction. The space Rb communicates with the through-hole 48a. A space Ra, a liquid supply chamber 26a, and a supply flow path 26b are formed by coupling the flow path substrate 53 and the flow path sealing member 64 to each other. The space Ra is an internal space of the first opening portion 32a. The liquid supply chamber 26a is a space surrounded by the first opening portion 32a, the second opening portion 32b, a partition wall 32d that separates the first opening portion 32a and the second opening portion 32b from each other, and the flow path sealing member 64. The supply flow path 26b is an internal space of the second opening portion 32b. The space Ra communicates with the space Rb and the liquid supply chamber 26a, and the liquid supply chamber 26a communicates with the supply flow path 26b. A pressure chamber C is formed by coupling the pressure chamber substrate 34 and the vibration plate 54 to each other. The pressure chamber C is a space surrounded by the opening portion 34a and the vibration plate 54. The pressure chamber C communicates with the supply flow path 26b. A communication flow path 26c is formed by coupling the flow path substrate 53 and the nozzle plate 62 to each other. The communication flow path 26c is an internal space of the third opening portion 32c. The communication flow path 26c communicates with the pressure chamber C and the nozzle N.

The space Ra and the space Rb function as a liquid storage chamber that stores the ink supplied to the pressure chamber C. The space Rb communicates with a plurality of spaces Ra disposed side by side in the Y direction, and the ink supplied through the through-hole 48a is stored in the plurality of spaces Ra via the space Rb. The ink stored in the spaces Ra circulates through the liquid supply chamber 26a and the supply flow path 26b and is supplied to the pressure chamber C.

Each of the four through-holes 48a formed in the ejecting unit 26 communicates with each of the holder first through-holes 322 of the holder member 32. In this manner, the first ink is stored in one of the two spaces Rb formed in the ejecting unit 26. The second ink is stored in the other space Rb of the two spaces Rb formed in the ejecting unit 26.

In a plan view as viewed in the Z direction, the piezoelectric element 44 is disposed at a position overlapping each of the two pressure chambers C. A driving signal and a reference voltage are input to the piezoelectric element 44 via the flexible substrate 51a. The piezoelectric element 44 is deformed by the input of the driving signal and the reference voltage and the application of the voltage, the vibration plate 54 vibrates in conjunction with the deformation of the piezoelectric element 44, the pressure in the pressure chamber C fluctuates, and thus the ink is ejected from the nozzle N.

As described above, the ejecting unit 26 is stored in the internal space of the holder member 32, the reinforcing plate 37 and the fixing plate 36 are disposed below the ejecting unit 26, and the members are bonded to each other with a glue.

The fixing plate 36 is disposed inside the holder member 32 in a plan view of the liquid ejecting head 30 from below in the Z direction. A gap is present between the fixing plate 36 and the holder member 32. Further, the holder member 32 and the fixing plate 36 are bonded to each other by the cured substance GL of a glue. The cured substance GL fills the gap between the holder member 32 and the fixing plate 36 and a gap between the holder member 32 and the reinforcing plate 37. In addition, a gap is also present between the nozzle plate 62 and the fixing plate 36. Further, the nozzle plate 62 and the fixing plate 36 are bonded to each other by the cured substance GL of a glue. The cured substance GL fills the gap between the nozzle plate 62 and the fixing plate 36. The holder member 32 is also referred to as a first member PA1, and the fixing plate 36 is also referred to as a second member PA2.

A4. Details of glue:

FIG. 5 is a view showing a process until the glue is cured after the glue is applied. In FIG. 4, the gap between the

holder member 32 and the fixing plate 36 and the gap between the fixing plate 36 and the nozzle plate 62 are shown in a simplified manner, but the actual gaps have a complicated shape. As shown in FIG. 5, in the present disclosure, as a structure model in which the gap is filled with the glue, a structure model in which the gap formed in the first member PA1 and the second member PA2 includes a first glue flow path PG1, a second glue flow path PG2, and a third glue flow path PG3 is used. The first glue flow path PG1 and the third glue flow path PG3 are flow paths in the Z direction. A cross-sectional area of the third glue flow path PG3 is less than the cross-sectional area of the first glue flow path PG1. The second glue flow path PG2 is a flow path that couples the first glue flow path PG1 and the third glue flow path PG3 to each other.

Further, in a bonding step using a glue, which is one step in the step of producing the liquid ejecting head 30, the coating surface of a member to be coated with the glue is disposed to face upward in the vertical direction. Specifically, the liquid ejecting head 30 is disposed such that the nozzle plate 62 faces upward in the bonding process.

As shown in (S1) of FIG. 5, an opening of the first glue flow path PG1 is coated with the glue by using, for example, a dispenser. Further, FIG. 5 shows a case where the opening width of the first glue flow path PG1 is less than the minimum discharge width of the dispenser.

As shown in (S2) of FIG. 5, the glue moves downward in the first glue flow path PG1 due to the own weight. Further, after the glue is disposed at the opening of the first glue flow path PG1, the first member PA1 and the second member PA2 are held at a holding temperature higher than room temperature and lower than the curing temperature of the glue for a predetermined holding time. The holding temperature is, for example, about 40°C or higher and 60°C or lower. The holding time is, for example, several hours. The viscosity of the glue at the holding temperature is usually less than the viscosity thereof at room temperature. Therefore, when the temperature increases, the glue is wet and spreads, and moves toward the third glue flow path PG3 in the second glue flow path PG2.

Here, the inventors have found the presence of a difference in movement of the glue in the third glue flow path PG3 depending on the surface tension of the glue. That is, when the surface tension of the glue is relatively large, the glue can crawl up by the capillary phenomenon and move upward in the third glue flow path PG3 as shown in (S4) of FIG. 5. Meanwhile, when the surface tension of the glue is relatively small, the glue cannot move upward in the third glue flow path PG3. In this case, the glue is cured at the curing temperature set after the elapse of the holding time, and the glue is formed into the cured substance GL in a state of filling only the first glue flow path PG1 and the second glue flow path PG2. Further, in this case, the excess glue spreads on the bonding surfaces of the first member PA1 and the second member PA2. In this case, the excess cured substance GL impairs the appearance. Further, for example, when a water-repellent region PA2a where water-repellent processing is performed is formed at the bonding surface of the second member PA2, and the cured substance GL is formed at the water-repellent region PA2a, the cured substance GL on the water-repellent region PA2a is peeled off or cracked. Therefore, it is not preferable that the cured substance GL of the glue is formed at the water-repellent region PA2a. Further, the cured substance GL indicated by the dashed line in (S3) of FIG. 5 shows a case where the excess glue spreads and is cured on the bonding surface.

As shown in (S4) of FIG. 5, when the glue can move in the third glue flow path PG3, the glue is formed into the cured substance GL in a state where the first glue flow path PG1, the second glue flow path PG2, and the third glue flow path PG3 are filled with the glue. Therefore, there is a demand for a glue having an appropriate surface tension that enables the glue to crawl up a narrow gap such as the third glue flow path PG3 at a temperature lower than the curing temperature.

In addition, as described above, a liquid having acidity, a liquid containing glycol ether, or the like is used as the ink in the liquid ejecting head 30. The ink ejected from the nozzle N becomes mist and adheres to the exposed surface of the nozzle plate 62 or the fixing plate 36. Therefore, when the resistance of the cured substance GL of the glue to the properties of the ink is low, the cured substance GL of the glue is likely to deteriorate. In particular, in a bonding portion in which a narrow gap such as the third glue flow path PG3 is not filled with the cured substance GL, the ink is likely to leak due to the deterioration of the cured substance GL. Therefore, the cured substance GL of the glue is required to have acid resistance and glycol ether resistance. Here, "glycol ether resistance" denotes a property that a chemical structure is unlikely to change even when exposed to glycol ether. In the following description, the acid resistance and the glycol ether resistance are collectively referred to as liquid resistance.

In addition, the glue is required to have a low environmental load. For example, it is known that bisphenol A used for synthesis of a glycidyl ether type epoxy resin that is commonly used as a glue and nonylphenol that can be used as a curing accelerator in a curing reaction have a large environmental load. The inventors have found a glue having an appropriate surface tension, a low environmental load, and liquid resistance.

Specifically, in the present embodiment, the glue used for bonding the holder member 32 and the fixing plate 36 and bonding the fixing plate 36 and the nozzle plate 62 is a one-liquid type glue having the characteristics of the present disclosure. In the following description, the one-liquid type glue having the characteristics of the present disclosure is also simply referred to as a glue unless otherwise specified.

The one-liquid type glue contains an epoxy resin containing no bisphenol, a curing agent containing a polymer of an aromatic amine, and an alkylphenol. The alkylphenol is an alkylphenol (a) containing at least one ethyl group or an alkylphenol (b) in which the alkyl group has 1 to 3 carbon atoms and which contains at least one methyl group and one isopropyl group.

The epoxy resin that does not contain bisphenol is a resin in which bisphenol is not used in the synthesis of the epoxy resin. In the present embodiment, the epoxy resin that does not contain bisphenol is N,N,N',N'-tetraglycidyl-m-xylenediamine or 4,4'-methylenebis(N,N-diglycidylaniline), which is a tetrafunctional glycidyl amine type epoxy resin. In the present embodiment, the polymer of an aromatic amine is a 2-ethylaniline-formaldehyde polymerizable compound.
Further, in the present embodiment, the alkylphenol (a) is an alkylphenol represented by Formula (1), and the alkylphenol (b) is an alkylphenol represented by Formula (2).

[Chem. 1]

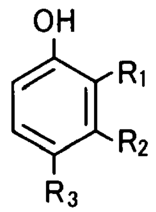

(1)

(Here, $R_1$, $R_2$, and $R_3$ in Formula (1) represent hydrogen or an ethyl group, and at least one of $R_1$, $R_2$, and $R_3$ represents an ethyl group.)

[Chem. 2]

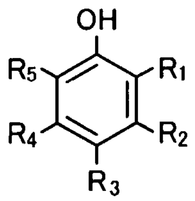

(2)

(Here, $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group). In addition, in the present embodiment, the alkylphenol represented by Formula (1) is 4-ethylphenol, and the alkylphenol represented by Formula (2) is carvacrol, ortho-cymen-5-ol, or thymol. The glue having the above-described characteristics has an appropriate surface tension, a low environmental load, and liquid resistance.
The epoxy resin contained in the glue is a so-called bisphenol-free epoxy resin that does not contain bisphenol. Accordingly, the environmental load can be reduced as compared with a glycidyl ether type epoxy resin which is an epoxy resin containing bisphenol. Therefore, the glue is particularly useful when printing is performed on the medium 12 used as a packaging material for food by using the liquid ejecting apparatus 100.
The glue contains a polymer of an aromatic amine. In this manner, the acid resistance of the cured substance GL can be improved. It is known that the glycidyl amine type epoxy resin has lower reactivity with an amine as compared with a glycidyl ether type epoxy resin which is widely used. In addition, an aromatic amine usually has lower reactivity with an epoxy resin than the reactivity of an aliphatic amine or an alicyclic amine. The inventors have found that the curing reaction can be promoted by allowing the glue to contain the alkylphenol (a) or the alkylphenol (b) in addition to the glycidyl amine type epoxy resin and the polymer of an aromatic amine.
Further, in the present embodiment, the glue contains 3,4-dihydrocoumarin. In this manner, the acid resistance can be improved.
Further, in the present embodiment, the ratio of the phenol equivalent of the alkylphenol (a) or the alkylphenol (b) to the amine equivalent of the polymer of an aromatic amine is 0.05 or greater and 0.22 or less. In this manner, as described below in the test examples, a glue having an appropriate surface tension at the holding temperature and excellent liquid resistance can be provided. Here, the amine equivalent is determined by Equation (e1). The phenol equivalent is determined by Equation (e2).

$$\text{Amine equivalent} = \text{molecular weight of amines}/\text{number of active hydrogens of amines} \cdots (e1)$$

$$\text{Phenol equivalent} = \text{molecular weight of phenol}/\text{number of hydroxyl groups} \cdots (e2)$$

In addition, the ester equivalent described below is determined by Equation (e3).

$$\text{Ester equivalent} = \text{molecular weight of lactones/number of ester groups} \cdots \text{(e3)}$$

Here, the expression "ratio of the phenol equivalent to the amine equivalent" when the glue contains a plurality of kinds of phenols denotes that the glue is prepared such that the total equivalent obtained by adding the equivalent of each phenol coincides with the mass of the phenol calculated using the ratio (phenol equivalent/amine equivalent). The details will be described in the test examples below.

Further, in the present embodiment, the phenol equivalent of the alkylphenol (a) or the alkylphenol (b) is 0.6 or greater with respect to an amine equivalent of 5.6 of the polymer of an aromatic amine. In this manner, the liquid resistance of the glue can be further improved.

Further, in the present embodiment, the equivalent of the ester group in a ring of 3,4-dihydrocoumarin is 0.1 or greater with respect to an amine equivalent of 5.6 of the polymer of an aromatic amine. In this manner, the acid resistance of the glue can be further improved.

As described above, the one-liquid type glue having the characteristics described in the present embodiment has a low environmental load, an appropriate surface tension, and excellent liquid resistance. Since the glue has an appropriate surface tension at the holding temperature, the reliability of the liquid ejecting head 30 can be improved by filling the narrow gap between the first member PA1 and the second member PA2 that are bonded to each other with the cured substance GL of the one-liquid type glue. In addition, since the glue has liquid resistance, even when an acidic ink or an ink containing glycol ether is used as the liquid ejected from the nozzle N, the deterioration of the cured substance GL of the one-liquid type glue can be suppressed, and the reliability of the liquid ejecting head 30 can be improved. In addition, since the environmental load is small, the printed material on which printing is performed using the liquid ejecting apparatus 100 can be used at ease.

Further, the one-liquid type glue used for producing the liquid ejecting head 30 is not limited to the above-described embodiment. Specifically, the epoxy resin containing no bisphenol is not limited to the tetrafunctional glycidyl amine type epoxy resin. The tetrafunctional glycidyl amine type epoxy resin is not limited to N,N,N',N'-tetraglycidyl-m-xylenediamine or 4,4'-methylenebis(N,N-diglycidylaniline). The epoxy resin containing no bisphenol may contain a plurality of kinds of epoxy resins. In addition, the polymer of an aromatic amine is not limited to a 2-ethylaniline-formaldehyde polymerizable compound, and may be, for example, a 2-ethyl-6-methylaniline-formaldehyde polymerizable compound. Even when these components are used, each of these components has the same chemical properties as the chemical properties of the corresponding component of the above-described embodiment, and thus a one-liquid type glue that exhibits the same effect as the effects of the above-described embodiment can be prepared.

In addition, the glue may contain no 3,4-dihydrocoumarin. When the glue contains 3,4-dihydrocoumarin, the equivalent of the ester group in a ring of 3,4-dihydrocoumarin may be less than 0.1 with respect to an amine equivalent of 5.6 of the polymer of an aromatic amine. The ratio of the phenol equivalent of the alkylphenol (a) or the alkylphenol (b) to the amine equivalent of the polymer of an aromatic amine may be less than 0.05 or greater than 0.22. Even when the glue does not contain 3,4-dihydrocoumarin, a one-liquid type glue having an appropriate surface tension, a low environmental load, and liquid resistance can be prepared. In addition, a one-liquid type glue having an appropriate surface tension, a low environmental load, and liquid resistance can be prepared regardless of the values of the above-described ratio.

B. Test example:

B1. List of components:

FIG. 6 shows a list of components used in the tests. FIG. 7 shows chemical structural formulae from Chemical Formula (f1) to Chemical Formula (f3). In the present specification, each component is specified by using a unique name provided for each component.

The CAS registry number of a component CA-1 is 63738-22-7. As shown in Chemical Formula (f1) of FIG. 7, the component CA-1 is N,N,N',N'-tetraglycidyl-m-xylenediamine, which is an epoxy resin containing a tetrafunctional group. In the test, TETRAD-X (registered trademark/product name, manufactured by Mitsubishi Gas Chemical Company, Inc.) was used as the component CA-1. The CAS registry number of a component CA-2 is 28768-32-3. As shown in Chemical Formula (f2) of FIG. 7, the component CA-2 is 4,4'-methylenebis(N,N-diglycidylaniline), which is an epoxy resin containing a tetrafunctional group. In the test, ELM434VL (product name, manufactured by Sumitomo Chemical Co., Ltd.) was used as the component CA-2.

The CAS registry number of the component CB-1 is 69178-41-2. As shown in Chemical Formula (f3) of FIG. 7, the component CB-1 is a polymer of an aromatic amine. n in Chemical Formula (f3) represents an integer of 2 or greater. In the test, KAYAHARD (registered trademark) AA (product name, manufactured by Nippon Kayaku Co., Ltd.) was used as the component CB-1.

A component CC-1 is carvacrol which is a phenol, and the CAS registry number is 499-75-2. In the test, a product

manufactured by Tokyo Chemical Industry Co., Ltd. was used as the component CC-1. A component CC-2 is 4-ethylphenol which is a phenol, and the CAS registry number is 123-07-9. In the test, a product manufactured by Tokyo Chemical Industry Co., Ltd. was used as the component CC-2. A component CC-3 is ortho-cymen-5-ol which is a phenol, and the CAS registry number is 3228-02-2. In the test, a product manufactured by Tokyo Chemical Industry Co., Ltd. was used as the component CC-3. A component CC-4 is thymol which is a phenol, and the CAS registry number is 89-83-8. In the test, a product manufactured by Tokyo Chemical Industry Co., Ltd. was used as the component CC-4. The component CC-5 is 2,4,6-tris(dimethylaminomethyl)phenol of phenols, and the CAS registry number is 90-72-2. In the test, a product manufactured by Tokyo Chemical Industry Co., Ltd. was used as the component CC-5.

The component CD-1 is 3,4-dihydrocoumarin of a lactone, and the CAS registry number is 119-84-6. In the test, a product manufactured by Tokyo Chemical Industry Co., Ltd. was used as the component CD-1.

The component CE-1 is polyoxypropylenediamine of an aliphatic amine, and the CAS registry number is 9046-10-0. In the test, a product manufactured by Mitsui Chemicals, Inc. was used as the component CE-1. The component CE-2 is 4,4'-diamino-3,3'-diethyl-5,5'-dimethyl diphenylmethane of an aromatic amine, and the CAS registry number is 19900-72-2. In the test, a product manufactured by Tokyo Chemical Industry Co., Ltd. was used as the component CE-2. The component CE-3 is 1-benzyl-2-methyl imidazole of imidazoles, and the CAS registry number is 13750-62-4. In the test, a product manufactured by Tokyo Chemical Industry Co., Ltd. was used as the component CE-3.

The molecular weight, the reactive group, the number of reactive groups, and the equivalent of each component are as shown in FIG. 6. In each of the tests described below, the mass was calculated using the equivalent mass shown in FIG. 6 to obtain the target equivalent ratio.

In each of Tests 1 to 9, Evaluation A for evaluating the acid resistance of the cured substance of the glue, Evaluation B for evaluating the glycol ether resistance of the cured substance of the glue, and Evaluation C for evaluating the surface tension of the glue were performed.

FIG. 8 is a view for explaining the evaluation A. FIGS. 10 to 20 are tables showing the components, the equivalent ratios and the mass ratios of the components, and the evaluation results in each test. Further, the mass ratio is equal to the mass of each component satisfying the equivalent ratio when the total mass obtained by adding the mass of all components is set to 100 g. The mass ratios shown in each of the tables of FIG. 10 to FIG. 20 are substantially the same as the equivalent ratios. In the present specification, the mass ratios are also described for reference.

B2. Description of Evaluation A (acid resistance):

B2-1. Preparation of evaluation object:

First, a cured substance having a dumbbell shape shown in FIG. 8 was prepared. The dumbbell shape is based on the plastic test piece type CP of Japanese Industrial Standard JIS K 7139. As the details of the preparation method, first, cutting processing was performed to prepare a mold having a dumbbell shape into a polytetrafluoroethylene (PTFE) sheet having a thickness of 3 mm.

Next, a glue was prepared. Here, a method of preparing a cured substance will be described with reference to Test Example 1. A glue was prepared by mixing the component CA-1 which is an epoxy resin, the component CB-1 which is an amine, and the component CC-2 which is a phenol at the equivalent ratio and the mass ratio shown in FIG. 10.

The glue was poured into the prepared dumbbell-shaped mold, and the glue overflowing was removed with a PTFE squeegee. A PTFE sheet in which the glue was accommodated in the mold was put into a constant temperature bath at room temperature, and the constant temperature bath was heated to 80°C after 30 minutes. Thereafter, the glue was cured by being heated in a constant temperature bath at 80°C for 10 hours. After the heating was stopped, the cured substance was allowed to stand for 5 hours while being placed in the constant temperature bath, and the cured substance was returned to room temperature after the temperature of the constant temperature bath was lowered to about 40°C. Further, the PTFE sheet was deformed to take out the cured substance.

Next, the prepared cured substance was immersed in a first evaluation liquid at 60°C for one week. Specifically, the cured substance was put into a 30 ml LABORAN (registered trademark) screw tube bottle, the evaluation liquid was poured so that the entire cured substance was immersed, the bottle was sealed, and the bottle was allowed to stand in a constant temperature bath at 60°C for one week. The first evaluation liquid is a liquid that imitates the acidic treatment ink used in the above-described liquid ejecting apparatus 100. The components of the first evaluation liquid and the mass ratios of the respective components are as follows. The lactic acid contained in the first evaluation liquid is an organic acid, and the pH of the first evaluation liquid is about 2.

(First evaluation liquid)

Component: mass ratio
3-methyl-1,5-pentanediol (MPD): 10
OLFINE (registered trademark) E1010: 1
Water: 84
Lactic acid: 5

Next, the cured substance was separated from the evaluation liquid using an aspirator type filtration device. As a filter for filtration, a PTFE membrane filter having a pore size of 10 μm was used. The remaining cured substance on the funnel side was washed with pure water and ethanol in a state of containing minute objects of the cured substance, and dried at 25°C for 1 day. The dried cured substance was evaluated by the evaluation A-1, the evaluation A-2, and the evaluation A-3 described below. In the following description, the dried cured substance is also referred to as an evaluation object.

B2-2. Evaluation A-1 (weight change rate):

When the weight of the cured substance before the immersion in the first evaluation liquid is defined as W1 and the weight of the evaluation object is defined as W2, the swelling ratio was calculated using Equation (e4).

$$\text{Swelling ratio [\%]} = (W2 - W1)/W1 \times 100 \cdots (e4)$$

In a case where a cured substance has poor acid resistance, that is, the chemical structure of the cured substance is easily changed by an acid, the cured substance is swollen and the mass thereof increases when the cured substance is immersed in the evaluation liquid. Therefore, the acid resistance was evaluated in three ranks of A, B, and C based the determined swelling ratio as described below. The ranks indicate that the acid resistance is excellent in order of C, B, and A. Further, the cured substance with poor acid resistance typically has a shape that is broken and is divided into a plurality of small pieces when immersed in the evaluation liquid. Therefore, the evaluation A-2 described below was performed on the cured substance maintained in a dumbbell shape.

A: The swelling ratio is less than 15%.
B: The swelling ratio is 15% or greater and less than 20%.
C: The swelling ratio is 20% or greater.

B2-3. Evaluation A-2 (tensile breaking strength):

The tensile strength of the evaluation object was measured using a tensile testing device. The tensile testing device used was STB-1225S (manufactured by A and D Company, Limited). Specifically, a parallel tightening type jaw was attached to each of both wide end portions of the dumbbell-shaped cured substance, the evaluation object was pulled at a rate of 0.5 mm/min until the cured substance was broken, and the tensile load at the time of breaking was measured. In addition, the area of the broken surface was measured and acquired with a digital microscope VHX-6000 (manufactured by Keyence Corporation). The breaking strength was calculated by Equation (e5) using the obtained tensile load and the area of the broken surface.

$$\text{Breaking strength [MPa]} = \text{tensile load [N]} / \text{area of broken portion [mm}^2\text{]} \cdots (e5)$$

The breaking strength increases as the acid resistance of the cured substance is more excellent. Therefore, as described below, the breaking strength was evaluated in three ranks of A, B, and C. The ranks indicate that the acid resistance is excellent in order of C, B, and A.

A: The breaking strength is 30 MPa or greater.
B: The breaking strength is 20 MPa or greater and less than 30 MPa.
C: The breaking strength is less than 20 MPa.

B2-4. Evaluation A-3 (appearance observation):

The acid resistance of the evaluation object was evaluated by appearance observation. In the cured substance with poor acid resistance, the chemical structure is changed due to the acid, and cracks occur in the evaluation object. In addition, when the chemical structure is changed, the color changes to brown. Cracks and discoloration are likely to occur

at an edge portion of the evaluation object having a dumbbell shape. Therefore, the appearance was evaluated in four ranks of A, B, C, and D as follows. The ranks indicate that the acid resistance is excellent in order of D, C, B, and A.

A: Discoloration or cracks are not found at the edge portion.
B: Discoloration is found at the edge portion, but cracks are not found.
C: Discoloration and cracks are found at the edge portion.
D: Cracks are found at sites other than the edge portion, and the shape is not maintained.

B3. Description of Evaluation B (glycol ether resistance)

Evaluation B is different from Evaluation A in terms of the component of the evaluation liquid in which the cured substance is immersed and the threshold value of the rank in the evaluation of the weight change rate. Therefore, the different part will be described, and the description of the part that is the same as in the evaluation A will be omitted.

B3-1. Evaluation B:

The components of the second evaluation liquid and the mass ratio of each component used in Evaluation B are as follows. The second evaluation liquid is a liquid that imitates the colored ink containing glycol ether used in the liquid ejecting apparatus 100 described above. The second evaluation liquid contains diethylene glycol monobutyl ether instead of lactic acid contained in the first evaluation liquid.

Second evaluation liquid
Component: mass ratio
3-methyl-1,5-pentanediol (MPD): 10
OLFINE (registered trademark) E1010: 1
Water: 84
Diethylene glycol monobutyl ether: 5

B3-2. Evaluation B-1 (weight change rate):

The threshold value in the rank of the swelling ratio in Evaluation B-1 is as follows.

A: The swelling ratio is less than 5%.
B: The swelling ratio is 5% or greater and less than 10%
C: The swelling ratio is 10% or greater.

B4. Description of Evaluation C (surface tension):

FIG. 9 is a view showing the evaluation method for Evaluation C. A glue was prepared by mixing each component in the same manner as in the method of preparing the glue in Evaluation A. 2.5 g of the prepared glue was taken in a LABORAN glass screw tube bottle (4 ml) 2 hours after the mixing. Next, a capillary tube having a diameter of 0.46 mm was inserted into the bottom of the LABORAN glass screw tube bottle accommodating the glue. The LABORAN glass screw tube bottle in a state where the capillary tube inserted was allowed to stand in a constant temperature chamber at 40°C for 2 hours. After two hours, the upper end portion of the capillary tube protruding from the LABORAN glass screw tube bottle was blocked with a finger, and the capillary tube was pulled out from the LABORAN glass screw tube bottle. Further, a filling length h, which is the length of the capillary tube of a portion in the capillary tube filled with the glue in the axial direction, was measured. Further, two hours correspond to the above-described holding time for the glue to spread in the gap of the liquid ejecting head 30.

As the filling length h increases, the surface tension increases. Therefore, the surface tension was evaluated in three ranks of A, B, and C. The ranks indicate that the surface tension is high in order of C, B, and A.

A: The filling length h is 46 mm or greater.
B: The filling length h is 42 mm or greater and less than 46 mm.
C: The filling length h is less than 42 mm.

B5. Test 1:

As described above, the inventors have found that a one-liquid type glue having an appropriate surface tension

and liquid resistance can be prepared by allowing the glue to contain an epoxy resin, a polymer of an aromatic amine, and the alkylphenol (a) or the alkylphenol (b) described above. In Test 1, the content of alkylphenol and the effectiveness of 3,4-dihydrocoumarin were evaluated.

FIG. 10 is a table showing the equivalent ratios, the mass ratios, and the evaluation results of Test Examples 1 to 6 of Test 1. FIG. 10 shows the values of the ratio (C/B). The ratio (C/B) is a ratio of the phenol equivalent of the alkylphenol (a) or the alkylphenol (b) to the amine equivalent of the polymer of an aromatic amine. In Test Example 3, the phenols contained in the glue are two types of phenols, which are the component CC-1 and the component CC-2. When the amine equivalent of the component CB-1 is defined as Ae (CB-1), the phenol equivalent of the component CC-1 is defined as Ae (CC-1), and the phenol equivalent of the component CC-2 is defined as Ae (CC-2), the ratio (C/B) is determined by Equation (e6).

$$\text{Ratio } C/B = (Ae(CC\text{-}1) + Ae(CC\text{-}2))/Ae(CB\text{-}1) \cdots (e6)$$

In Test 1, the ratio (C/B) was set to "0.0536" or "0.1071".

In Test Examples 1 to 3, the glue contains the epoxy resin (component CA-1), the polymer of an aromatic amine (component CB-1), and at least one of carvacrol (component CC-1) and 4-ethylphenol (component CC-2). In Test Examples 1 and 2, even though the evaluation result in Evaluation A-3 was the rank C, the evaluation result in Evaluation B-3 was the rank A, and the evaluation results in Evaluation A-1, Evaluation A-2, Evaluation B-1, Evaluation B-2, and Evaluation C were all the rank B, which were satisfactory results. Therefore, it is found that satisfactory evaluation results are obtained by setting the ratio (C/B) to at least 0.0536 or greater and 0.1071 or less.

It is considered that such satisfactory results are obtained because an appropriate surface tension is imparted to the glue while the alkylphenol (a) or the alkylphenol (b) promotes the curing reaction to such an extent that the viscosity of the glue is not extremely increased. Further, when the viscosity of the glue is not extremely increased, the glue easily spreads in the gap between the first member PA1 and the second member PA2, which is preferable. In addition, the alkylphenol (a) or the alkylphenol (b) described above contains a plurality of compounds having high safety, as represented by carvacrol. Therefore, a glue can be prepared without containing nonylphenol, which is an endocrine disruptor, as a curing accelerator.

Further, when focusing on the evaluation results of Evaluation A-1, Evaluation A-2, Evaluation B-1, and Evaluation B-2, the evaluation result of Test Example 3 was the rank A, which is more satisfactory than the evaluation results of Test Example 1 and Test Example 2. Therefore, it is found that satisfactory evaluation results can be obtained for the liquid resistance, the weight change rate, and the tensile breaking strength when the phenol equivalent is set to 0.6 instead of 0.3.

Test Examples 4 to 6 are different from Test Examples 1 to 3 in terms that the glue contained the component CD-1 (3,4-dihydrocoumarin). The results of Evaluation A-3 of Test Examples 4 to 6 are the rank B, which are more satisfactory than the rank C of Test Examples 1 to 3. Therefore, it is found that when the glue contains the component CD-1, the acid resistance is improved without occurrence of cracks and discoloration even when the glue is exposed to an acid.

B6. Test 2:

FIG. 11 is a table showing the equivalent ratios, the mass ratios, and the evaluation results of Test Examples 7 to 12 of Test 2. As shown in the results of Test 1, it is found that the phenol equivalent was preferably 0.6 instead of 0.3 in terms of the liquid resistance. Therefore, in Test 2, the phenol equivalent was set to 0.6 or 1.2. That is, the equivalent ratio of the alkylphenol was increased.

When focusing on the evaluation results of Evaluation A-1, Evaluation A-2, Evaluation B-1, and Evaluation B-2, the evaluation results of Test Examples 7, 8, 10, and 11 are the rank A, which are more satisfactory than the evaluation results of Test Examples 1, 2, 4, and 5 in which the phenol equivalent is 0.3. Therefore, it is found that satisfactory evaluation results can be obtained for the liquid resistance, the weight change rate, and the tensile breaking strength when the phenol equivalent is set to 0.6 instead of 0.3.

Further, when focusing on the evaluation result of Evaluation C, the evaluation result of Test Example 9 is the rank A, which is more satisfactory than the evaluation results of Test Examples 7 and 8 in which the phenol equivalent is 0.6. Therefore, it is found that even when the glue does not contain the component CD-1 (3,4-dihydrocoumarin), satisfactory evaluation results can be obtained for the surface tension by setting the phenol equivalent to 1.2. In addition, when focusing on the evaluation result of Evaluation A-3, the evaluation result of Test Example 9 is the rank B, which is more satisfactory than the evaluation results of Test Examples 7 and 8 in which the phenol equivalent is 0.6. Therefore, it is found that even when the glue does not contain the component CD-1 (3,4-dihydrocoumarin), satisfactory evaluation results can be obtained for the acid resistance related to cracks and discoloration by setting the phenol equivalent to 1.2.

Test examples 10 to 12 are different from Test Examples 7 to 9 in terms that the glue contains the component CD-1

(3,4-dihydrocoumarin). The results of Evaluation A-3 of Test Examples 10 to 12 are the rank A, which are more satisfactory than the rank C or the rank B of Test Examples 7 to 9. Therefore, it is found that the acid resistance related to cracks and discoloration is improved when the glue contains the component CD-1 as shown in the results of Test 1.

B7. Test 3:

FIG. 12 is a table showing the equivalent ratios and the mass ratios of Test Examples 13 to 17 of Test 3. FIG. 13 is a table collectively showing the evaluation results of Test 3 and the evaluation results of Test 4. As shown in the results of Test 2, it is found that more satisfactory evaluation results for the surface tension were obtained when the phenol equivalent was set to 1.2 instead of 0.6. Therefore, in Test 3, the phenol equivalent was fixed at 1.2, and the kinds of phenol contained in the glue were increased.
As shown in the evaluation results of Test 3 in FIG. 13, the evaluation results of all of Test Examples 13 to 17 except for Evaluation A-3 were the rank A, the evaluation result of Evaluation A-3 was the rank B, and satisfactory results were obtained. In this manner, it is found that, satisfactory results are obtained even when the glue contained any of the component CC-1 (carvacrol), the component CC-2 (4-ethylphenol), the component CC-3 (ortho-cymen-5-ol), and the component CC-4 (thymol) as the phenol.

B8. Test 4:

FIG. 14 is a table showing the equivalent ratios and the mass ratios of Test Examples 18 to 22 of Test 4. Test 4 is different from Test 3 in terms that the glue contains the component CD-1 (3,4-dihydrocoumarin).
As shown in the evaluation results of Test 4 in FIG. 13, all the evaluation results of all the test examples of Test Examples 18 to 22 of Test 4 were the rank A. Therefore, it is found that the acid resistance related to cracks and discoloration is improved when the glue contains the component CD-1 as shown in the results of each test described above.

B9. Test 5:

FIG. 15 is a table showing the equivalent ratios, the mass ratios, and the evaluation results of Test Examples 23 to 28 of Test 5. Test 5 is different from Test 1 in terms that the glue contains the component CA-2 instead of the component CA-1, which is an epoxy resin. As can be seen from the comparison between FIGS. 10 and 15, each of Test Examples 18 to 22 corresponds to each of Test Examples 1 to 6 of Test 1.
The results of Test 5 are the same as the results of Test 1 except that the result of Evaluation C of Test Example 28 is the rank B and the result of Evaluation C of Test Example 6 is different from the rank A. Therefore, it is found that the same results as in each of the tests described above are obtained even when the component CA-2 is used instead of the component CA-1 as the epoxy resin.

B10. Test 6:

FIG. 16 is a table showing the equivalent ratios, the mass ratios, and the evaluation results of Test Examples 29 to 33 of Test 6. Test 6 is different from Test 4 in terms that the glue contains the component CA-2 instead of the component CA-1, which is an epoxy resin. As can be seen from the comparison between FIG. 16 and FIG. 14, each of Test Examples 29 to 33 corresponds to each of Test Examples 18 to 22 of Test 4.
The results of Test 6 are the same as the results of Test 4. Therefore, it is found that the same results as in each of the tests described above are obtained even when the component CA-2 is used instead of the component CA-1 as the epoxy resin.

B11. Test 7:

FIG. 17 is a table showing the equivalent ratios and the mass ratios of Test Examples 34 to 41 of Test 7. FIG. 18 is a table collectively showing the evaluation results of Test 7 and the evaluation results of Test 8. In each of the tests described above, the ratio (C/B) is 0.0536 or greater and 0.2143 or less. In Test 7, the ratio (C/B) was set to "0.0357" and "0.2321" which are outside the above-described range. In addition, the component CC-1 (carvacrol), the component CC-2 (4-ethylphenol), the component CC-3 (ortho-cymen-5-ol), and the component CC-4 (thymol) were used as the phenol. In addition, the glue does not contain the component CD-1 (3,4-dihydrocoumarin) in Test 7.
As shown in the evaluation results of Test 7 in FIG. 18, the evaluation results of Test Examples 34 to 37 in which the ratio (C/B) was "0.0357" were the same as the evaluation results of Test Examples 1 and 2 in which the ratio (C/B) was "0.0537" shown in FIG. 10.

As shown in the evaluation results of Test 7 in FIG. 18, in the evaluation results of Test Examples 38 to 41 in which the ratio (C/B) was "0.2321", the evaluation result of Evaluation A-3 was the rank B, and the evaluation results other than Evaluation A-3 were the rank A, which were the satisfactory evaluation results.

As shown in the evaluation results of Tests 1 to 7 described above, in the test examples in which the ratio (C/B) was in a range of 0.0357 or greater and 0.2321 or less, the evaluation results of each evaluation except for Evaluation A-3 were the rank B or higher, which were sufficiently satisfactory results. Therefore, it is found that a glue having an appropriate surface tension and excellent liquid resistance can be prepared by setting the ratio (C/B) to be in a range of 0.05 or greater and 0.22 or less.

Further, it was considered that the ratio (C/B) being outside the above-described range is not preferable due to the following reasons. As the ratio (C/B) decreases, the amount of phenol with respect to the amine decreases. Since the phenol promotes the curing reaction, it is necessary to increase the curing temperature in order to promote the curing reaction when the amount of phenol is small. In each of the tests described above, the curing temperature is set to 80°C, but when the amount of phenol is intended to be reduced, the curing temperature is required to be set higher than 80°C, for example, 100°C. When the curing temperature is increased, a stress is generated when different materials having a difference in linear expansion coefficient are bonded to each other, which is not preferable. On the contrary, as the ratio (C/B) increases, the amount of phenol with respect to the amine increases. As the temperature increases, the consumption rate of phenol due to the chemical reaction increases. In this manner, there is a concern that the swelling ratio in a case of exposure to an acid increases. B12. Test 8:

FIG. 19 is a table showing the equivalent ratios and the mass ratios of Test Examples 42 to 49 of Test 8. Test 8 is different from Test 7 in terms that the glue contains the component CD-1 (3,4-dihydrocoumarin). Each of Test Examples 42 to 49 of Test 8 corresponds to each of Test Examples 34 to 41 of Test 7. In addition, the ester equivalent of the component CD-1 was increased to 0.5 in Test 8.

As can be seen from the comparison between the evaluation result of Test 7 and the evaluation result of Test 8 in FIG. 18, the evaluation result of Evaluation A-3 becomes satisfactory when the glue contains the component CD-1 (3,4-dihydrocoumarin). In this manner, it is found that the glue containing 3,4-dihydrocoumarin is preferable. In addition, it is found that the same evaluation results as described above are obtained even when the ester equivalent of 3,4-dihydrocoumarin is increased to 0.5.

Further, since the component CD-1 (3,4-dihydrocoumarin) has an odor, it is not preferable to increase the equivalent ratio thereof. In addition, when the equivalent ratio of the component CD-1 (3,4-dihydrocoumarin) is large, the viscosity of the glue decreases. Further, since the component CD-1 promotes the curing reaction, when the glue contains a large amount of the component CD-1, the glue is cured at an early stage. Therefore, the equivalent of the component CD-1 (3,4-dihydrocoumarin) is preferably about 0.1 equivalent or greater and 0.5 equivalent or less with respect to an amine equivalent of 5.6.

B13. Test 9:

FIG. 20 is a table showing the equivalent ratios, the mass ratios, and the evaluation results of Test Examples 50 to 54 of Test 9. Test Examples 50 and 51 are test examples in which the glue contains the component CA-1 (epoxy resin) and the component CB-1 (polymer of an aromatic amine), and the component CE-3, which is imidazoles known as a curing accelerator, or the component CC-5, which is a phenol that is neither the alkylphenol (a) nor the alkylphenol (b). Based on the comparison between Test Example 50 and Test Example 1 of Test 1, the evaluation results of Evaluation A-1 and Evaluation A-2 of Test Example 50 are the rank C, which are worse than the evaluation result of Test Example 1. Similarly, based on the comparison between Test Example 51 and Test Example 1 of Test 1, the evaluation results of Evaluation A-1 and Evaluation A-2 of Test Example 51 are the rank C, which are worse than the evaluation result of Test Example 1. As described above, it is found that the acid resistance is improved when the glue contains 2,4,6-tris(dimethylaminomethyl) phenol as the curing accelerator.

Test Examples 52 and 53 are test examples in which the glue contains the component CA-1, and the component CE-1 which is an aliphatic amine or the component CE-2 which is an aromatic amine. Based on the comparison between Test Example 52 and Test Example 1 of Test 1, the evaluation results of Evaluation A-1 and Evaluation A-2 of Test Example 52 are the rank C, which are worse than the evaluation result of Test Example 1. Similarly, based on the comparison between Test Example 53 and Test Example 1 of Test 1, the evaluation results of Evaluation A-1 and Evaluation A-2 of Test Example 53 are the rank C, which are worse than the evaluation result of Test Example 1. As described above, it is found that the acid resistance is improved when the glue contains a polymer of an aromatic amine as the amine.

Test Example 54 is an test example in which the glue contained only the component CA-1 (epoxy resin) and the component CB-1 (polymer of aromatic amine). In Test Example 54, since the glue did not contain a curing accelerator, the glue was not cured under the curing conditions set in the test.

As shown in the results described above, it is found that the glue containing an epoxy resin, a curing agent containing a polymer of an aromatic amine, and 2,4,6-tris(dimethylaminomethyl)phenol has an appropriate surface

tension at the holding temperature and has excellent liquid resistance.

C. Other Embodiments:

(C1) In the above-described embodiment, the embodiment in which the one-liquid type glue is applied to the liquid ejecting head 30 is described, but the member to which the one-liquid type glue is applied is not limited to the liquid ejecting head 30. Further, in the above-described embodiment, the glue does not contain a filler, but may contain a filler for adjusting the viscosity.

D. Other Aspects:

The present disclosure is not limited to the above-described embodiments, and can be realized in various configurations within the scope not departing from the concept of the present disclosure. For example, technical features in the embodiments corresponding to technical features in each aspect to be described below can be replaced or combined as appropriate to solve some or all of the problems described above, or to achieve some or all of the effects described above. Further, when the technical features are not described as essential in the present specification, the technical features can be appropriately deleted.

(1) According to a first aspect of the present disclosure, there is provided a liquid ejecting head that ejects a liquid from a nozzle. The liquid ejecting head includes a first member; a second member; and a cured substance of a one-liquid type glue that bonds the first member and the second member, in which the one-liquid type glue contains an epoxy resin containing no bisphenol, a curing agent containing a polymer of an aromatic amine, and an alkylphenol, and the alkylphenol is an alkylphenol (a) containing at least one ethyl group or an alkylphenol (b) in which an alkyl group has 1 to 3 carbon atoms and which contains at least one methyl group and one isopropyl group. According to this aspect, the environmental load can be reduced by using an epoxy resin containing no bisphenol. In addition, when a polymer of an aromatic amine is used, the acid resistance of the cured substance and the resistance to an organic solvent such as glycol ether can be improved. In addition, when the alkylphenol (a) or the alkylphenol (b) is used, the glue has an appropriate surface tension that enables crawling up through a narrow gap at a temperature lower than the curing temperature, and is cured at the curing temperature. Therefore, the gap between the first member and the second member is filled, the adhesiveness can be improved, and the reliability of the liquid ejecting head can be improved.

(2) In the liquid ejecting head of the above-described aspect, the epoxy resin containing no bisphenol may contain a tetrafunctional glycidyl amine type epoxy resin.

(3) In the liquid ejecting head of the above-described aspect, the tetrafunctional glycidyl amine type epoxy resin may include at least one of N,N,N',N'-tetraglycidyl-m-xylenediamine and 4,4'-methylenebis(N, N-diglycidylaniline).

(4) In the liquid ejecting head of the above-described aspect, the polymer of an aromatic amine may contain a 2-ethylaniline-formaldehyde polymerizable compound.

(5) In the liquid ejecting head of the above-described aspect, the one-liquid type glue may contain 3,4-dihydrocoumarin. According to this aspect, the occurrence of cracks and discoloration can be suppressed even when the glue is exposed to an acidic liquid.

(6) In the liquid ejecting head of the above-described aspect, the alkylphenol may contain at least one of carvacrol, 4-ethylphenol, ortho-cymen-5-ol, and thymol. According to this aspect, a glue having high safety can be provided.

(7) In the liquid ejecting head of the above-described aspect, a ratio of a phenol equivalent of the alkylphenol to an amine equivalent of the polymer of an aromatic amine may be 0.05 or greater and 0.22 or less. According to this aspect, a glue having high resistance to the properties of a liquid and an appropriate surface tension can be provided.

(8) In the liquid ejecting head of the above-described aspect, the phenol equivalent of the alkylphenol may be 0.6 or greater with respect to an amine equivalent of 5.6 of the polymer of an aromatic amine. According to this aspect, a glue having high resistance to the properties of a liquid and an appropriate surface tension can be provided.

(9) In the liquid ejecting head of the above-described aspect, the phenol equivalent of the alkylphenol may be 1.2 or greater with respect to an amine equivalent of 5.6 of the polymer of an aromatic amine. According to this aspect, a glue having further improved acid resistance can be provided.

(10) In the liquid ejecting head of the above-described aspect, an ester equivalent of the 3,4-dihydrocoumarin may be 0.1 or greater with respect to an amine equivalent of 5.6 of the polymer of an aromatic amine. According to this aspect, a glue in which cracks or discoloration are unlikely to occur even when the glue is exposed to an acidic liquid can be provided.

(11) In the liquid ejecting head of the above-described aspect, the alkylphenol (a) may be an alkylphenol represented by Formula (1) (where $R_1$, $R_2$, and $R_3$ in Formula (1) represent hydrogen or an ethyl group, and at least one of $R_1$, $R_2$, and $R_3$ represents an ethyl group), and the alkylphenol (b) may be an alkylphenol represented by Formula (2) (where $R_1$, $R_2$, $R_3$, $R_4$, and $R_5$ in Formula (2) represent hydrogen or an alkyl group having 1 to 3 carbon atoms, at least one of

$R_1$, $R_2$, $R_3$, $R_4$, and $R_5$ represents a methyl group, and at least one of $R_1$, $R_2$, $R_3$, $R_4$, and $R_5$ represents an isopropyl group).

(12) According to a second aspect of the present disclosure, a one-liquid type glue can be provided. The one-liquid type glue includes an epoxy resin containing no bisphenol; a curing agent containing a polymer of an aromatic amine; and an alkylphenol, in which the alkylphenol is an alkylphenol (a) containing at least one ethyl group or an alkylphenol (b) in which an alkyl group has 1 to 3 carbon atoms and which contains at least one methyl group and one isopropyl group. According to this aspect, a glue that reduces the environmental load and has excellent acid resistance and excellent resistance to an organic solvent such as glycol ether can be provided. In addition, a glue that has an appropriate surface tension that enables crawling up through a narrow gap at a temperature lower than the curing temperature and is cured at the curing temperature can be provided.

(13) In the one-liquid type glue of the above-described aspect, the alkylphenol (a) may be an alkylphenol represented by Formula (1) (where $R_1$, $R_2$, and $R_3$ in Formula (1) represent hydrogen or an ethyl group, and at least one of $R_1$, $R_2$, and $R_3$ represents an ethyl group), and the alkylphenol (b) may be an alkylphenol represented by Formula (2) (where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

(14) In the one-liquid type glue of the above-described aspect, the one-liquid type glue may further contain 3,4-dihydrocoumarin. According to this aspect, a glue in which cracks or discoloration are unlikely to occur even when the glue is exposed to an acidic liquid can be provided.

## Claims

**1.** A liquid ejecting head configured to eject a liquid from a nozzle, the liquid ejecting head comprising:

a first member;
a second member; and
a cured substance of a one-liquid type glue that bonds the first member and the second member, wherein the one-liquid type glue contains

an epoxy resin containing no bisphenol,
a curing agent containing a polymer of an aromatic amine, and
an alkylphenol, and

the alkylphenol is an alkylphenol (a) containing at least one ethyl group or an alkylphenol (b) in which an alkyl group has 1 to 3 carbon atoms and which contains at least one methyl group and one isopropyl group.

**2.** The liquid ejecting head according to claim 1, wherein
the epoxy resin containing no bisphenol contains a tetrafunctional glycidyl amine type epoxy resin.

**3.** The liquid ejecting head according to claim 2, wherein
the tetrafunctional glycidyl amine type epoxy resin includes at least one of N,N,N',N'-tetraglycidyl-m-xylenediamine and 4,4'-methylenebis(N, N-diglycidylaniline).

**4.** The liquid ejecting head according to any one of claims 1 to 3, wherein
the polymer of an aromatic amine contains a 2-ethylaniline-formaldehyde polymerizable compound.

**5.** The liquid ejecting head according to any one of claims 1 to 4, wherein
the one-liquid type glue contains 3,4-dihydrocoumarin.

**6.** The liquid ejecting head according to any one of claims 1 to 5, wherein
the alkylphenol contains at least one of carvacrol, 4-ethylphenol, ortho-cymen-5-ol, and thymol.

**7.** The liquid ejecting head according to any one of claims 1 to 6, wherein
a ratio of a phenol equivalent of the alkylphenol to an amine equivalent of the polymer of an aromatic amine is 0.05 or greater and 0.22 or less.

**8.** The liquid ejecting head according to any one of claims 1 to 7, wherein

a phenol equivalent of the alkylphenol is 0.6 or greater with respect to an amine equivalent of 5.6 of the polymer of an aromatic amine.

**9.** The liquid ejecting head according to any one of claims 1 to 8, wherein a phenol equivalent of the alkylphenol is 1.2 or greater with respect to an amine equivalent of 5.6 of the polymer of an aromatic amine.

**10.** The liquid ejecting head according to claim 5, wherein an ester equivalent of the 3,4-dihydrocoumarin is 0.1 or greater with respect to an amine equivalent of 5.6 of the polymer of an aromatic amine.

**11.** The liquid ejecting head according to any one of claims 1 to 10, wherein

the alkylphenol (a) is an alkylphenol represented by Formula (1), and the alkylphenol (b) is an alkylphenol represented by Formula (2),

[Chem. 1]

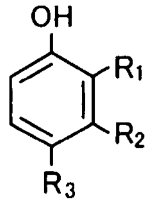

(1)

(where $R_1$, $R_2$, and $R_3$ in Formula (1) represent hydrogen or an ethyl group, and at least one of $R_1$, $R_2$, and $R_3$ represents an ethyl group),

[Chem. 2]

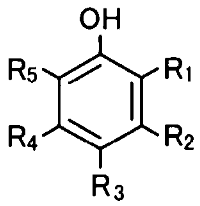

(2)

(where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

**12.** A one-liquid type glue comprising:

an epoxy resin containing no bisphenol;
a curing agent containing a polymer of an aromatic amine; and
an alkylphenol, wherein the alkylphenol is an alkylphenol (a) containing at least one ethyl group or an alkylphenol (b) in which an alkyl group has 1 to 3 carbon atoms and which contains at least one methyl group and one isopropyl group.

**13.** The one-liquid type glue according to claim 12, wherein

the alkylphenol (a) is an alkylphenol represented by Formula (1), and the alkylphenol (b) is an alkylphenol represented by Formula (2),

[Chem. 3]

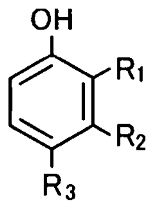

(1)

(where $R_1$, $R_2$, and $R_3$ in Formula (1) represent hydrogen or an ethyl group, and at least one of $R_1$, $R_2$, and $R_3$ represents an ethyl group),

[Chem. 4]

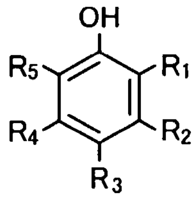

(2)

(where $R_1$, $R_2$, $R_3$, $R_4$, and $R_5$ in Formula (2) represent hydrogen or an alkyl group having 1 to 3 carbon atoms, at least one of $R_1$, $R_2$, $R_3$, $R_4$, and $R_5$ represents a methyl group, and at least one of $R_1$, $R_2$, $R_3$, $R_4$, and $R_5$ represents an isopropyl group).

**14.** The one-liquid type glue according to claim 12 or 13, further comprising: 3,4-dihydrocoumarin.

FIG. 1

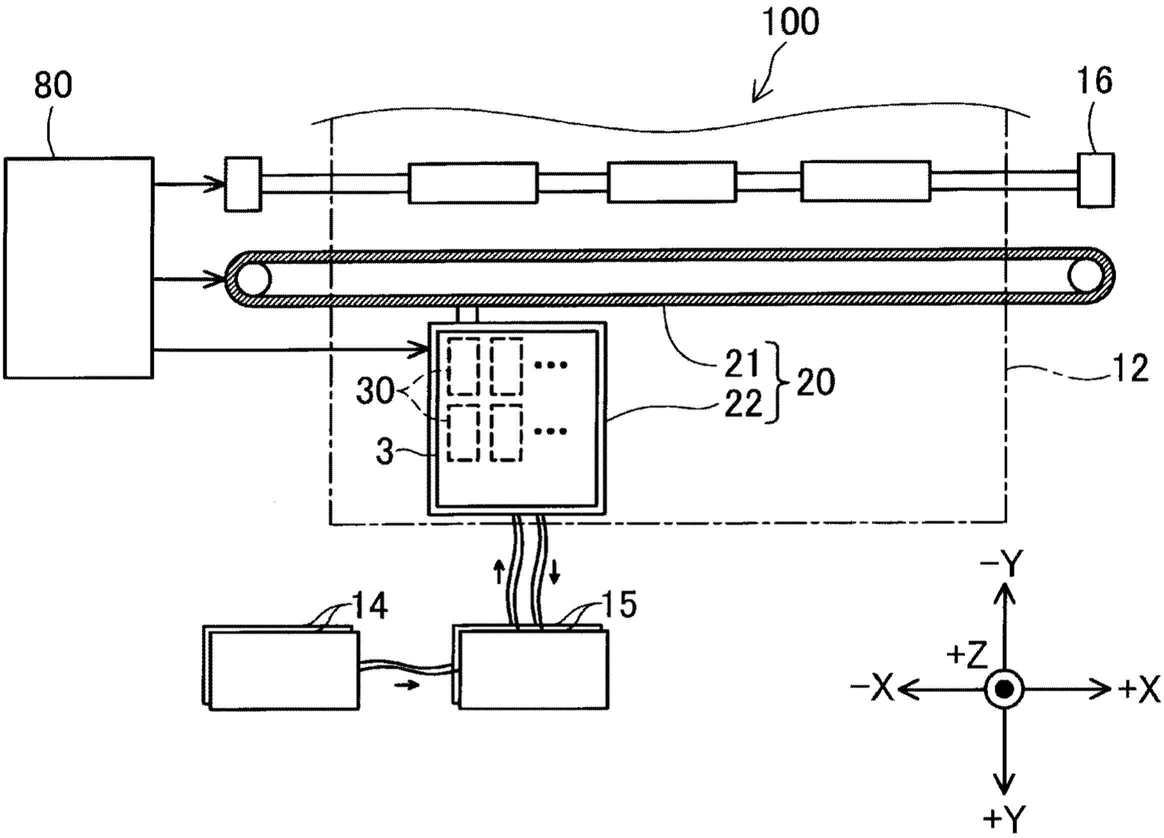

FIG. 2

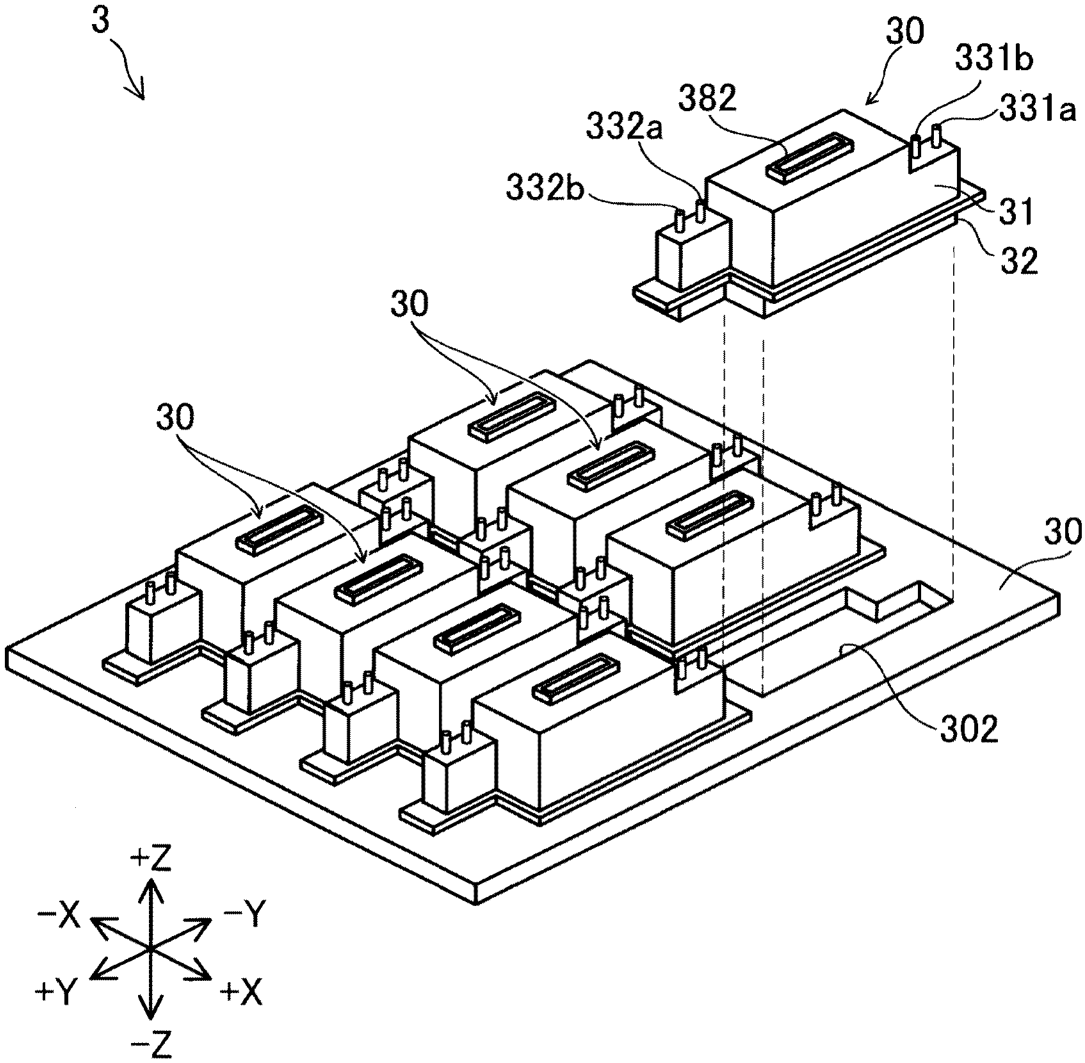

FIG. 3

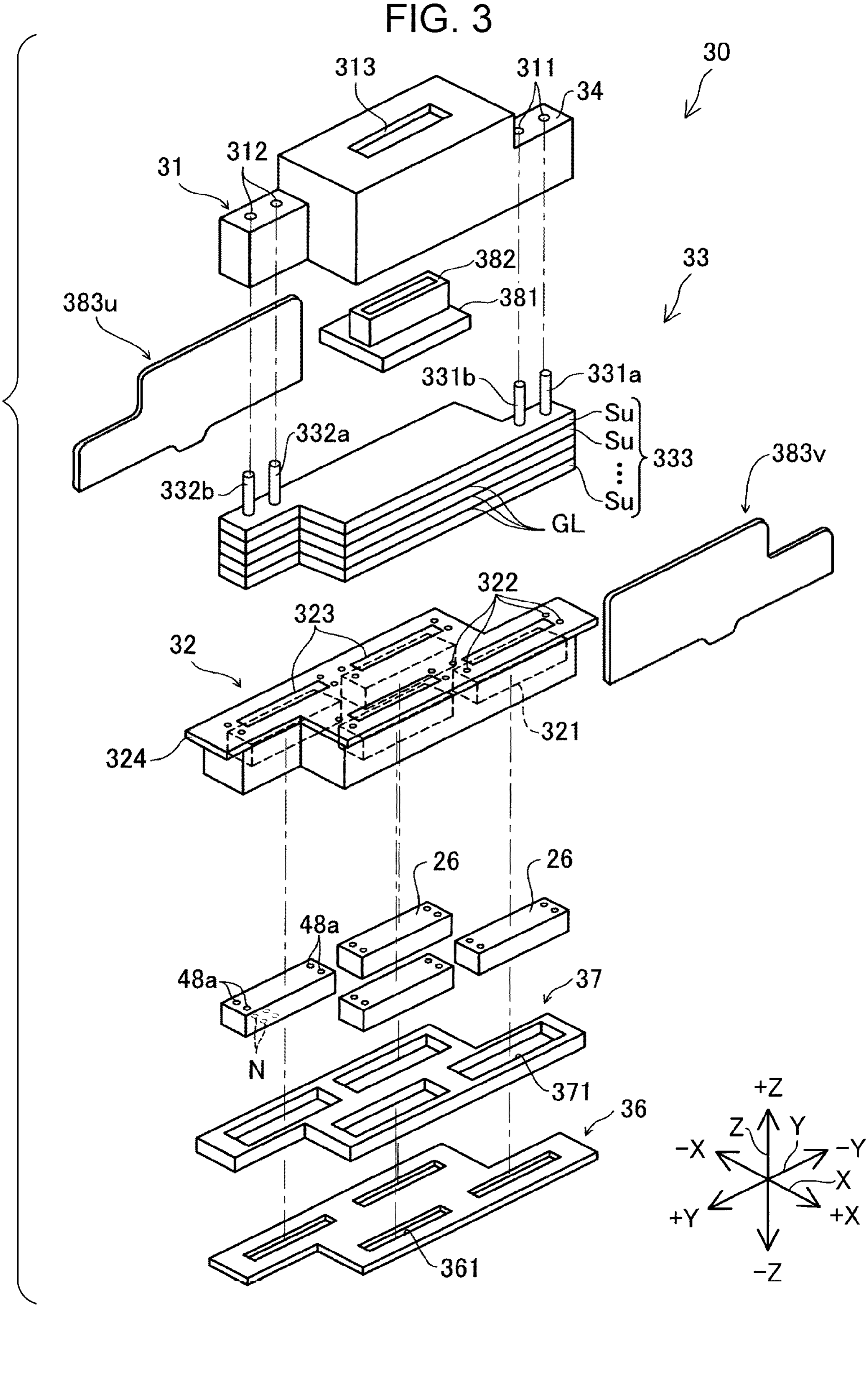
30
313
311
34
312
31
382
33
381
383u
331b
331a
Su
Su
332a
333
383v
332b
Su
GL
322
323
32
321
324
26
26
48a
48a
37
N
371
36
+Z
Z
Y
-X
-Y
X
+Y
+X
-Z
361

FIG. 4

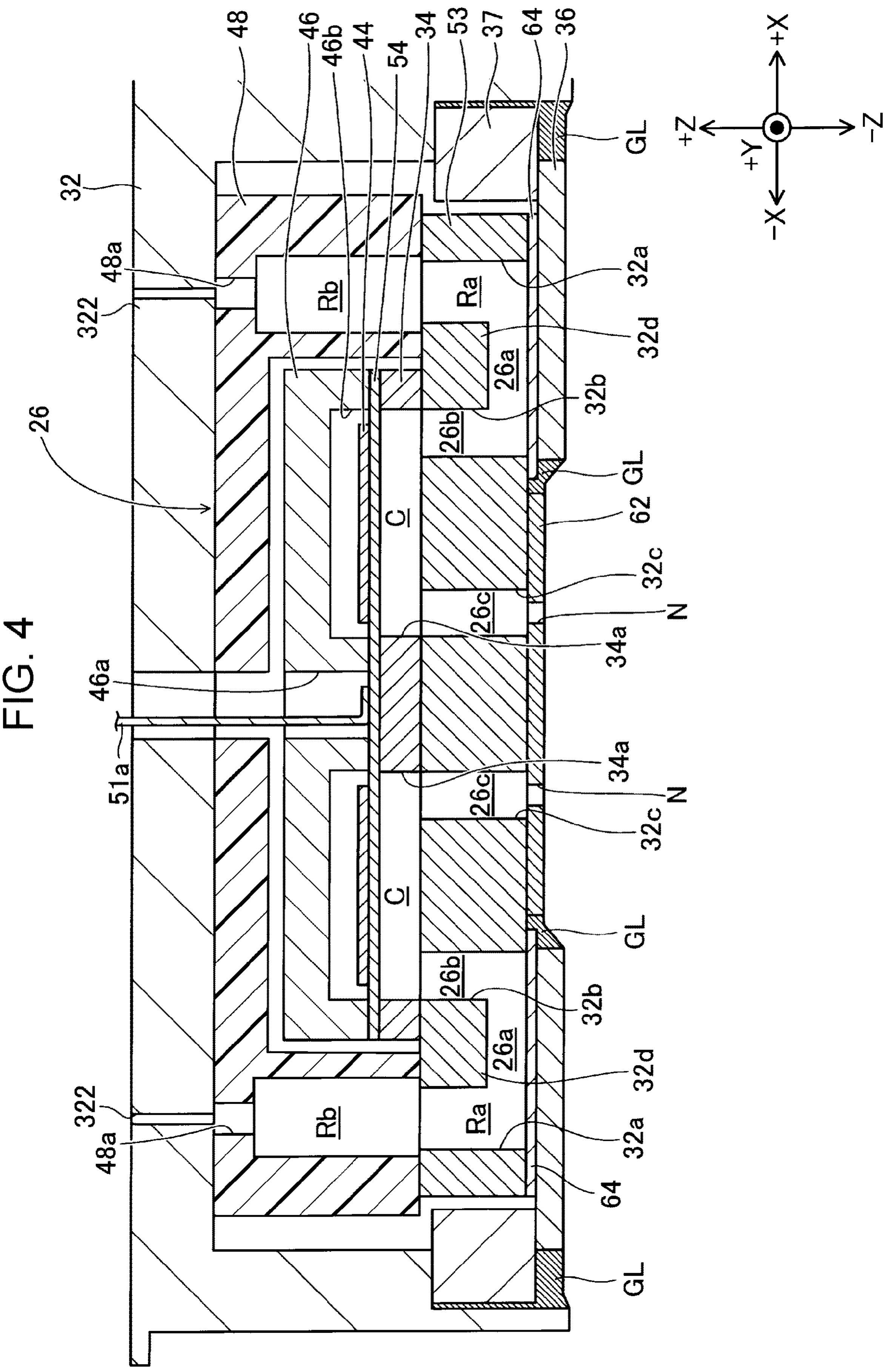
32
48
46
46b
44
54
34
53
37
64
36
GL
+X
-X
+Z
-Z
+Y
48a
322
Rb
Ra
32a
32d
26a
32b
26b
26
C
62
32c
26c
N
34a
46a
51a

FIG. 5

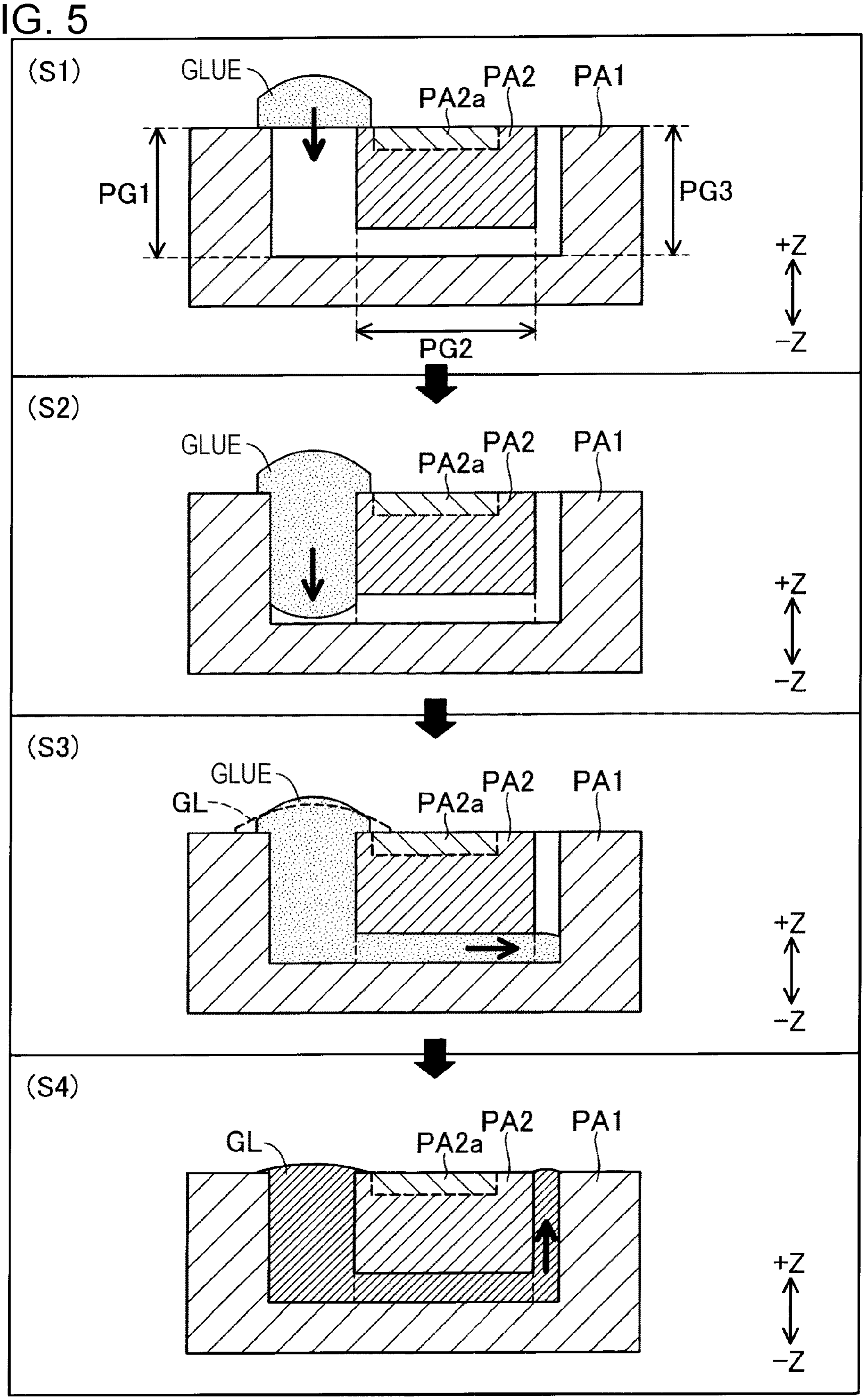
(S1)
GLUE
PA2
PA1
PA2a
PG1
PG3
+Z
−Z
PG2
(S2)
GLUE
PA2
PA1
PA2a
+Z
−Z
(S3)
GLUE
GL
PA2
PA1
PA2a
+Z
−Z
(S4)
GL
PA2
PA1
PA2a
+Z
−Z

FIG. 6

| COMPONENT | CHEMICAL STRUCTURE | MOLECULAR WEIGHT | REACTIVE GROUP | NUMBER OF REACTIVE GROUPS | EQUIVALENT |
|---|---|---|---|---|---|
| CA−1 | CHEMICAL FORMULA (f1) | 360.4 | EPOXY GROUP | 4 | 90.1 |
| CA−2 | CHEMICAL FORMULA (f2) | 422.5 | EPOXY GROUP | 4 | 105.6 |
| CB−1 | CHEMICAL FORMULA (f3) | 135.2 | AMINE ACTIVE HYDROGEN | 2 | 67.6 |
| CC−1 | CARVACROL | 150.2 | HYDROXYL GROUP | 1 | 150.2 |
| CC−2 | 4−ETHYLPHENOL | 122.17 | HYDROXYL GROUP | 1 | 122.2 |
| CC−3 | ORTHO−CYMEN−5−OL | 150.22 | HYDROXYL GROUP | 1 | 150.2 |
| CC−4 | THYMOL | 150.22 | HYDROXYL GROUP | 1 | 150.2 |
| CC−5 | 2,4,6−TRIS (DIMETHYLAMINOMETHYL) PHENOL | 265.4 | HYDROXYL GROUP | 1 | 265.4 |
| CD−1 | 3,4−DIHYDROCOUMARIN | 148.16 | ESTER GROUP | 1 | 148.2 |
| CE−1 | POLYOXYPROPYLENEDIAMINE | 240.0 | AMINE ACTIVE HYDROGEN | 4 | 60 |
| CE−2 | 4,4'−DIAMINO−3,3'−DIETHYL−5,5'−DIMETHYLDIPHENYLMETHANE | 282.43 | AMINE ACTIVE HYDROGEN | 4 | 70.6 |
| CE−3 | 1−BENZYL−2−METHYLIMIDAZOLE | 172.23 | ACTIVE HYDROGEN | 1 | 172.2 |

FIG. 7

| | |
|---|---|
| (f1) | 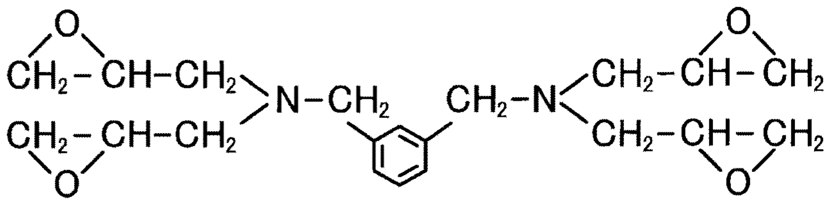 |
| (f2) | 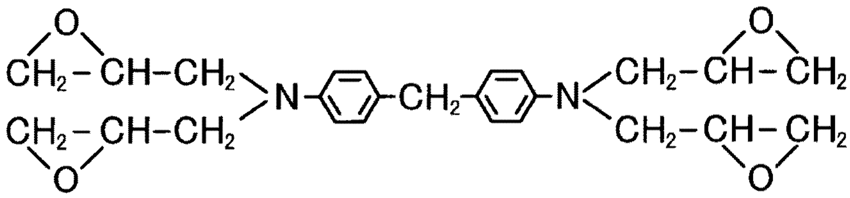 |
| (f3) | 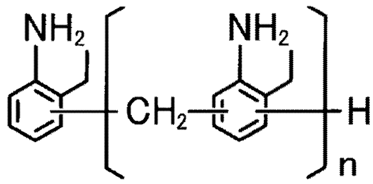 |

FIG. 8

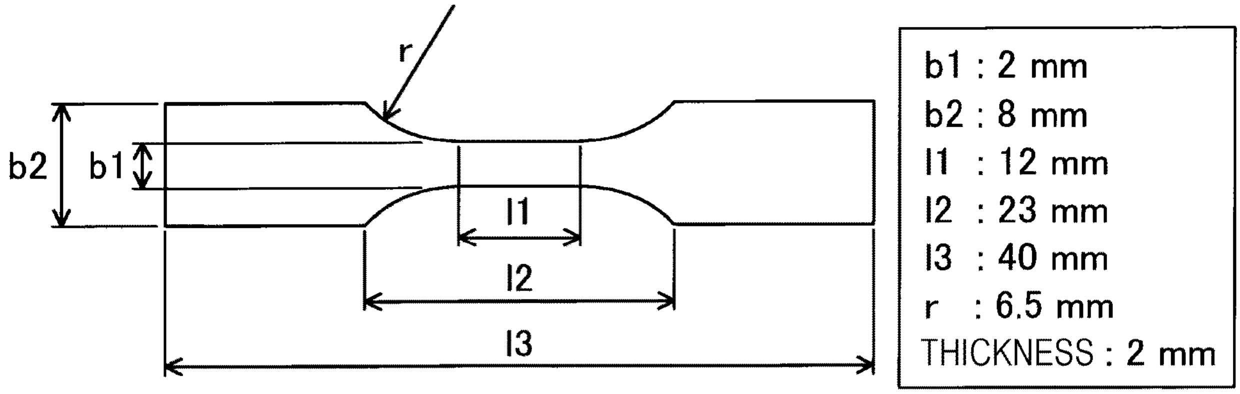
r
b2
b1
l1
l2
l3
b1 : 2 mm
b2 : 8 mm
l1 : 12 mm
l2 : 23 mm
l3 : 40 mm
r : 6.5 mm
THICKNESS : 2 mm

FIG. 9

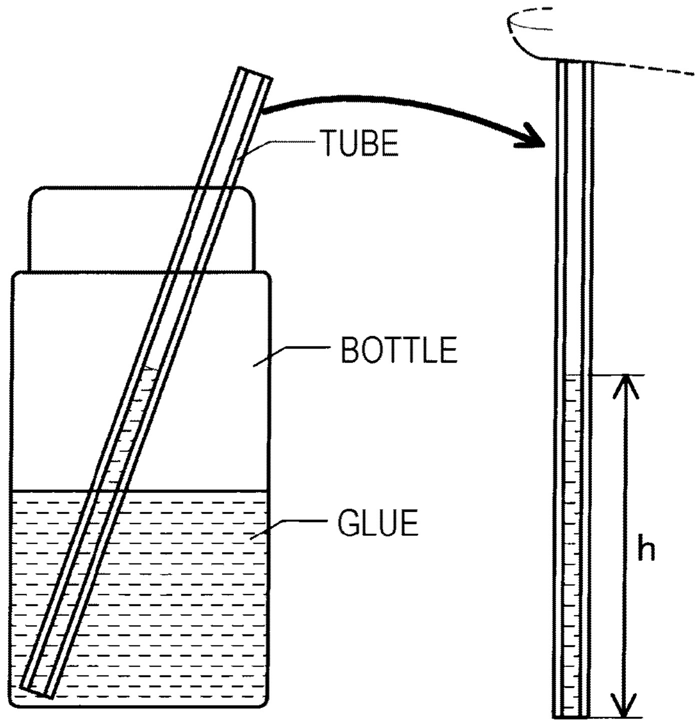
TUBE
BOTTLE
GLUE
h

FIG. 10

(TEST 1)

| EQUIVALENT RATIO | TEST EXAMPLE 1 | TEST EXAMPLE 2 | TEST EXAMPLE 3 | TEST EXAMPLE 4 | TEST EXAMPLE 5 | TEST EXAMPLE 6 |
|---|---|---|---|---|---|---|
| COMPONENT CA-1 | 5.1 | 5.1 | 5.1 | 5.1 | 5.1 | 5.1 |
| COMPONENT CB-1 | 5.6 | 5.6 | 5.6 | 5.6 | 5.6 | 5.6 |
| COMPONENT CC-1 | 0.0 | 0.3 | 0.3 | 0.0 | 0.3 | 0.3 |
| COMPONENT CC-2 | 0.3 | 0.0 | 0.3 | 0.3 | 0.0 | 0.3 |
| COMPONENT CD-1 | 0.0 | 0.0 | 0.0 | 0.1 | 0.1 | 0.1 |
| RATIO (C/B) | 0.0536 | 0.0536 | 0.1071 | 0.0536 | 0.0536 | 0.1071 |

| MASS RATIO | TEST EXAMPLE 1 | TEST EXAMPLE 2 | TEST EXAMPLE 3 | TEST EXAMPLE 4 | TEST EXAMPLE 5 | TEST EXAMPLE 6 |
|---|---|---|---|---|---|---|
| COMPONENT CA-1 | 52.5 | 52.0 | 50.0 | 51.7 | 51.2 | 49.2 |
| COMPONENT CB-1 | 43.3 | 42.9 | 41.2 | 42.6 | 42.2 | 40.5 |
| COMPONENT CC-1 | 0.0 | 5.1 | 4.9 | 0.0 | 5.0 | 4.8 |
| COMPONENT CC-2 | 4.2 | 0.0 | 4.0 | 4.1 | 0.0 | 3.9 |
| COMPONENT CD-1 | 0.0 | 0.0 | 0.0 | 1.7 | 1.6 | 1.6 |

| (TEST 1) | TEST EXAMPLE 1 | TEST EXAMPLE 2 | TEST EXAMPLE 3 | TEST EXAMPLE 4 | TEST EXAMPLE 5 | TEST EXAMPLE 6 |
|---|---|---|---|---|---|---|
| EVALUATION A-1 | B | B | A | B | B | A |
| EVALUATION A-2 | B | B | A | B | B | A |
| EVALUATION A-3 | C | C | C | B | B | B |
| EVALUATION B-1 | B | B | A | B | B | A |
| EVALUATION B-2 | B | B | A | B | B | A |
| EVALUATION B-3 | A | A | A | A | A | A |
| EVALUATION C | B | B | B | B | B | A |

# FIG. 11

(TEST 2)

| EQUIVALENT RATIO | TEST EXAMPLE | | | TEST EXAMPLE | | |
|---|---|---|---|---|---|---|
| | 7 | 8 | 9 | 10 | 11 | 12 |
| COMPONENT CA-1 | 5.1 | 5.1 | 5.1 | 5.1 | 5.1 | 5.1 |
| COMPONENT CB-1 | 5.6 | 5.6 | 5.6 | 5.6 | 5.6 | 5.6 |
| COMPONENT CC-1 | 0.0 | 0.6 | 0.6 | 0.0 | 0.6 | 0.6 |
| COMPONENT CC-2 | 0.6 | 0.0 | 0.6 | 0.6 | 0.0 | 0.6 |
| COMPONENT CD-1 | 0.0 | 0.0 | 0.0 | 0.1 | 0.1 | 0.1 |
| RATIO (C/B) | 0.1071 | 0.1071 | 0.2143 | 0.1071 | 0.1071 | 0.2143 |

| MASS RATIO | TEST EXAMPLE | | | TEST EXAMPLE | | |
|---|---|---|---|---|---|---|
| | 7 | 8 | 9 | 10 | 11 | 12 |
| COMPONENT CA-1 | 50.4 | 49.5 | 45.9 | 49.6 | 48.7 | 45.2 |
| COMPONENT CB-1 | 41.5 | 40.8 | 37.8 | 40.9 | 40.1 | 37.2 |
| COMPONENT CC-1 | 0.0 | 9.7 | 9.0 | 0.0 | 9.6 | 8.9 |
| COMPONENT CC-2 | 8.0 | 0.0 | 7.3 | 7.9 | 0.0 | 7.2 |
| COMPONENT CD-1 | 0.0 | 0.0 | 0.0 | 1.6 | 1.6 | 1.5 |

| (TEST 2) | TEST EXAMPLE | | | TEST EXAMPLE | | |
|---|---|---|---|---|---|---|
| | 7 | 8 | 9 | 10 | 11 | 12 |
| EVALUATION A-1 | A | A | A | A | A | A |
| EVALUATION A-2 | A | A | A | A | A | A |
| EVALUATION A-3 | C | C | B | A | A | A |
| EVALUATION B-1 | A | A | A | A | A | A |
| EVALUATION B-2 | A | A | A | A | A | A |
| EVALUATION B-3 | A | A | A | A | A | A |
| EVALUATION C | B | B | A | B | B | A |

# FIG. 12

(TEST 3)

| EQUIVALENT RATIO | TEST EXAMPLE | | | | |
|---|---|---|---|---|---|
| | 13 | 14 | 15 | 16 | 17 |
| COMPONENT CA-1 | 5.1 | 5.1 | 5.1 | 5.1 | 5.1 |
| COMPONENT CB-1 | 5.6 | 5.6 | 5.6 | 5.6 | 5.6 |
| COMPONENT CC-1 | 0.6 | 0.6 | 0.0 | 0.0 | 0.0 |
| COMPONENT CC-2 | 0.0 | 0.0 | 0.6 | 0.6 | 0.0 |
| COMPONENT CC-3 | 0.6 | 0.0 | 0.6 | 0.0 | 0.6 |
| COMPONENT CC-4 | 0.0 | 0.6 | 0.0 | 0.6 | 0.6 |
| RATIO (C/B) | 0.2143 | 0.2143 | 0.2143 | 0.2143 | 0.2143 |
| MASS RATIO | TEST EXAMPLE | | | | |
| | 13 | 14 | 15 | 16 | 17 |
| COMPONENT CA-1 | 45.1 | 45.1 | 45.9 | 45.9 | 45.1 |
| COMPONENT CB-1 | 37.2 | 37.2 | 37.8 | 37.8 | 37.2 |
| COMPONENT CC-1 | 8.9 | 8.9 | 0.0 | 0.0 | 0.0 |
| COMPONENT CC-2 | 0.0 | 0.0 | 7.3 | 7.3 | 0.0 |
| COMPONENT CC-3 | 8.9 | 0.0 | 9.0 | 0.0 | 8.9 |
| COMPONENT CC-4 | 0.0 | 8.9 | 0.0 | 7.9 | 8.9 |

FIG. 13

| (TEST 3) | TEST EXAMPLE | | | | |
|---|---|---|---|---|---|
| | 13 | 14 | 15 | 16 | 17 |
| EVALUATION A-1 | A | A | A | A | A |
| EVALUATION A-2 | A | A | A | A | A |
| EVALUATION A-3 | B | B | B | B | B |
| EVALUATION B-1 | A | A | A | A | A |
| EVALUATION B-2 | A | A | A | A | A |
| EVALUATION B-3 | A | A | A | A | A |
| EVALUATION C | A | A | A | A | A |

| (TEST 4) | TEST EXAMPLE | | | | |
|---|---|---|---|---|---|
| | 18 | 19 | 20 | 21 | 22 |
| EVALUATION A-1 | A | A | A | A | A |
| EVALUATION A-2 | A | A | A | A | A |
| EVALUATION A-3 | A | A | A | A | A |
| EVALUATION B-1 | A | A | A | A | A |
| EVALUATION B-2 | A | A | A | A | A |
| EVALUATION B-3 | A | A | A | A | A |
| EVALUATION C | A | A | A | A | A |

# FIG. 14

(TEST 4)

| EQUIVALENT RATIO | TEST EXAMPLE | | | | |
|---|---|---|---|---|---|
| | 18 | 19 | 20 | 21 | 22 |
| COMPONENT CA-1 | 5.1 | 5.1 | 5.1 | 5.1 | 5.1 |
| COMPONENT CB-1 | 5.6 | 5.6 | 5.6 | 5.6 | 5.6 |
| COMPONENT CC-1 | 0.6 | 0.6 | 0.0 | 0.0 | 0.0 |
| COMPONENT CC-2 | 0.0 | 0.0 | 0.6 | 0.6 | 0.0 |
| COMPONENT CC-3 | 0.6 | 0.0 | 0.6 | 0.0 | 0.6 |
| COMPONENT CC-4 | 0.0 | 0.6 | 0.0 | 0.6 | 0.6 |
| COMPONENT CD-1 | 0.1 | 0.1 | 0.1 | 0.1 | 0.1 |
| RATIO (C/B) | 0.2143 | 0.2143 | 0.2143 | 0.2143 | 0.2143 |

| MASS RATIO | TEST EXAMPLE | | | | |
|---|---|---|---|---|---|
| | 18 | 19 | 20 | 21 | 22 |
| COMPONENT CA-1 | 44.5 | 44.5 | 45.2 | 45.2 | 44.5 |
| COMPONENT CB-1 | 36.6 | 36.6 | 37.2 | 37.2 | 36.6 |
| COMPONENT CC-1 | 8.7 | 8.7 | 0.0 | 0.0 | 0.0 |
| COMPONENT CC-2 | 0.0 | 0.0 | 7.2 | 7.2 | 0.0 |
| COMPONENT CC-3 | 8.7 | 0.0 | 8.9 | 0.0 | 8.7 |
| COMPONENT CC-4 | 0.0 | 8.7 | 0.0 | 8.9 | 8.7 |
| COMPONENT CD-1 | 1.4 | 1.4 | 1.5 | 1.5 | 1.4 |

# FIG. 15

(TEST 5)

| EQUIVALENT RATIO | TEST EXAMPLE 23 | TEST EXAMPLE 24 | TEST EXAMPLE 25 | TEST EXAMPLE 26 | TEST EXAMPLE 27 | TEST EXAMPLE 28 |
|---|---|---|---|---|---|---|
| COMPONENT CA-2 | 5.1 | 5.1 | 5.1 | 5.1 | 5.1 | 5.1 |
| COMPONENT CB-1 | 5.6 | 5.6 | 5.6 | 5.6 | 5.6 | 5.6 |
| COMPONENT CC-1 | 0.0 | 0.3 | 0.3 | 0.0 | 0.3 | 0.3 |
| COMPONENT CC-2 | 0.3 | 0.0 | 0.3 | 0.3 | 0.0 | 0.3 |
| COMPONENT CD-1 | 0.0 | 0.0 | 0.0 | 0.1 | 0.1 | 0.1 |
| RATIO (C/B) | 0.0536 | 0.0536 | 0.1071 | 0.0536 | 0.0536 | 0.1071 |

| MASS RATIO | TEST EXAMPLE 23 | TEST EXAMPLE 24 | TEST EXAMPLE 25 | TEST EXAMPLE 26 | TEST EXAMPLE 27 | TEST EXAMPLE 28 |
|---|---|---|---|---|---|---|
| COMPONENT CA-2 | 56.5 | 56.0 | 53.9 | 55.6 | 55.1 | 53.1 |
| COMPONENT CB-1 | 39.7 | 39.3 | 37.9 | 39.1 | 38.7 | 37.3 |
| COMPONENT CC-1 | 0.0 | 4.7 | 4.5 | 0.0 | 4.6 | 4.4 |
| COMPONENT CC-2 | 3.8 | 0.0 | 3.7 | 3.8 | 0.0 | 3.6 |
| COMPONENT CD-1 | 0.0 | 0.0 | 0.0 | 1.5 | 1.5 | 1.5 |

| (TEST 5) | TEST EXAMPLE 23 | TEST EXAMPLE 24 | TEST EXAMPLE 25 | TEST EXAMPLE 26 | TEST EXAMPLE 27 | TEST EXAMPLE 28 |
|---|---|---|---|---|---|---|
| EVALUATION A-1 | B | B | A | B | B | A |
| EVALUATION A-2 | B | B | A | B | B | A |
| EVALUATION A-3 | C | C | C | B | B | B |
| EVALUATION B-1 | B | B | A | B | B | A |
| EVALUATION B-2 | B | B | A | B | B | A |
| EVALUATION B-3 | A | A | A | A | A | A |
| EVALUATION C | B | B | B | B | B | B |

FIG. 16

(TEST 6)

| EQUIVALENT RATIO | TEST EXAMPLE | | | | |
|---|---|---|---|---|---|
| | 29 | 30 | 31 | 32 | 33 |
| COMPONENT CA-2 | 5.1 | 5.1 | 5.1 | 5.1 | 5.1 |
| COMPONENT CB-1 | 5.6 | 5.6 | 5.6 | 5.6 | 5.6 |
| COMPONENT CC-1 | 0.6 | 0.6 | 0.0 | 0.0 | 0.0 |
| COMPONENT CC-2 | 0.0 | 0.0 | 0.6 | 0.6 | 0.0 |
| COMPONENT CC-3 | 0.6 | 0.0 | 0.6 | 0.0 | 0.6 |
| COMPONENT CC-4 | 0.0 | 0.6 | 0.0 | 0.6 | 0.6 |
| COMPONENT CD-1 | 0.1 | 0.1 | 0.1 | 0.1 | 0.1 |
| RATIO (C/B) | 0.2143 | 0.2143 | 0.2143 | 0.2143 | 0.2143 |

| MASS RATIO | TEST EXAMPLE | | | | |
|---|---|---|---|---|---|
| | 29 | 30 | 31 | 32 | 33 |
| COMPONENT CA-2 | 48.4 | 48.4 | 49.2 | 49.2 | 48.4 |
| COMPONENT CB-1 | 34.0 | 34.0 | 34.6 | 34.6 | 34.0 |
| COMPONENT CC-1 | 8.1 | 8.1 | 0.0 | 0.0 | 0.0 |
| COMPONENT CC-2 | 0.0 | 0.0 | 6.7 | 6.7 | 0.0 |
| COMPONENT CC-3 | 8.1 | 0.0 | 8.2 | 0.0 | 8.1 |
| COMPONENT CC-4 | 0.0 | 8.1 | 0.0 | 8.2 | 8.1 |
| COMPONENT CD-1 | 1.3 | 1.3 | 1.4 | 1.4 | 1.3 |

| (TEST 6) | TEST EXAMPLE | | | | |
|---|---|---|---|---|---|
| | 29 | 30 | 31 | 32 | 33 |
| EVALUATION A-1 | A | A | A | A | A |
| EVALUATION A-2 | A | A | A | A | A |
| EVALUATION A-3 | A | A | A | A | A |
| EVALUATION B-1 | A | A | A | A | A |
| EVALUATION B-2 | A | A | A | A | A |
| EVALUATION B-3 | A | A | A | A | A |
| EVALUATION C | A | A | A | A | A |

# FIG. 17

(TEST 7)

| EQUIVALENT RATIO | TEST EXAMPLE | | | | TEST EXAMPLE | | | |
|---|---|---|---|---|---|---|---|---|
| | 34 | 35 | 36 | 37 | 38 | 39 | 40 | 41 |
| COMPONENT CA−1 | 5.1 | 5.1 | 5.1 | 5.1 | 5.1 | 5.1 | 5.1 | 5.1 |
| COMPONENT CB−1 | 5.6 | 5.6 | 5.6 | 5.6 | 5.6 | 5.6 | 5.6 | 5.6 |
| COMPONENT CC−1 | 0.2 | 0.0 | 0.0 | 0.0 | 1.3 | 0.0 | 0.0 | 0.0 |
| COMPONENT CC−2 | 0.0 | 0.2 | 0.0 | 0.0 | 0.0 | 1.3 | 0.0 | 0.0 |
| COMPONENT CC−3 | 0.0 | 0.0 | 0.2 | 0.0 | 0.0 | 0.0 | 1.3 | 0.0 |
| COMPONENT CC−4 | 0.0 | 0.0 | 0.0 | 0.2 | 0.0 | 0.0 | 0.0 | 1.3 |
| RATIO (C/B) | 0.0357 | 0.0357 | 0.0357 | 0.0357 | 0.2321 | 0.2321 | 0.2321 | 0.2321 |

| MASS RATIO | TEST EXAMPLE | | | | TEST EXAMPLE | | | |
|---|---|---|---|---|---|---|---|---|
| | 34 | 35 | 36 | 37 | 38 | 39 | 40 | 41 |
| COMPONENT CA−1 | 52.9 | 53.3 | 52.9 | 52.9 | 44.5 | 46.1 | 44.5 | 44.5 |
| COMPONENT CD−1 | 43.6 | 43.9 | 43.6 | 43.6 | 36.6 | 38.0 | 36.6 | 36.6 |
| COMPONENT CC−1 | 3.5 | 0.0 | 0.0 | 0.0 | 18.9 | 0.0 | 0.0 | 0.0 |
| COMPONENT CC−2 | 0.0 | 2.8 | 0.0 | 0.0 | 0.0 | 15.9 | 0.0 | 0.0 |
| COMPONENT CC−3 | 0.0 | 0.0 | 3.5 | 0.0 | 0.0 | 0.0 | 18.9 | 0.0 |
| COMPONENT CC−4 | 0.0 | 0.0 | 0.0 | 3.5 | 0.0 | 0.0 | 0.0 | 18.9 |

FIG. 18

| (TEST 7) | TEST EXAMPLE | | | | TEST EXAMPLE | | | |
|---|---|---|---|---|---|---|---|---|
| | 34 | 35 | 36 | 37 | 38 | 39 | 40 | 41 |
| EVALUATION A-1 | B | B | B | B | A | A | A | A |
| EVALUATION A-2 | B | B | B | B | A | A | A | A |
| EVALUATION A-3 | C | C | C | C | B | B | B | B |
| EVALUATION B-1 | B | B | B | B | A | A | A | A |
| EVALUATION B-2 | B | B | B | B | A | A | A | A |
| EVALUATION B-3 | A | A | A | A | A | A | A | A |
| EVALUATION C | B | B | B | B | A | A | A | A |

| (TEST 8) | TEST EXAMPLE | | | | TEST EXAMPLE | | | |
|---|---|---|---|---|---|---|---|---|
| | 34 | 35 | 36 | 37 | 38 | 39 | 40 | 41 |
| EVALUATION A-1 | B | B | B | B | A | A | A | A |
| EVALUATION A-2 | B | B | B | B | A | A | A | A |
| EVALUATION A-3 | B | B | B | B | A | A | A | A |
| EVALUATION B-1 | B | B | B | B | A | A | A | A |
| EVALUATION B-2 | B | B | B | B | A | A | A | A |
| EVALUATION B-3 | A | A | A | A | A | A | A | A |
| EVALUATION C | B | B | B | B | A | A | A | A |

# FIG. 19

(TEST 8)

| EQUIVALENT RATIO | TEST EXAMPLE | | | | TEST EXAMPLE | | | |
|---|---|---|---|---|---|---|---|---|
| | 42 | 43 | 44 | 45 | 46 | 47 | 48 | 49 |
| COMPONENT CA-1 | 5.1 | 5.1 | 5.1 | 5.1 | 5.1 | 5.1 | 5.1 | 5.1 |
| COMPONENT CB-1 | 5.6 | 5.6 | 5.6 | 5.6 | 5.6 | 5.6 | 5.6 | 5.6 |
| COMPONENT CC-1 | 0.2 | 0.0 | 0.0 | 0.0 | 1.3 | 0.0 | 0.0 | 0.0 |
| COMPONENT CC-2 | 0.0 | 0.2 | 0.0 | 0.0 | 0.0 | 1.3 | 0.0 | 0.0 |
| COMPONENT CC-3 | 0.0 | 0.0 | 0.2 | 0.0 | 0.0 | 0.0 | 1.3 | 0.0 |
| COMPONENT CC-4 | 0.0 | 0.0 | 0.0 | 0.2 | 0.0 | 0.0 | 0.0 | 0.3 |
| COMPONENT CD-1 | 0.5 | 0.5 | 0.5 | 0.5 | 0.5 | 0.5 | 0.5 | 0.5 |
| RATIO (C/B) | 0.0357 | 0.0357 | 0.0357 | 0.0357 | 0.2321 | 0.2321 | 0.2321 | 0.2321 |

| MASS RATIO | TEST EXAMPLE | | | | TEST EXAMPLE | | | |
|---|---|---|---|---|---|---|---|---|
| | 42 | 43 | 44 | 45 | 46 | 47 | 48 | 49 |
| COMPONENT CA-1 | 48.77 | 49.06 | 48.77 | 48.77 | 41.50 | 42.91 | 41.50 | 41.50 |
| COMPONENT CB-1 | 40.18 | 40.42 | 40.18 | 40.18 | 34.18 | 35.35 | 34.18 | 34.18 |
| COMPONENT CC-1 | 3.19 | 0.0 | 0.0 | 0.0 | 17.63 | 0.0 | 0.0 | 0.0 |
| COMPONENT CC-2 | 0.0 | 2.61 | 0.0 | 0.0 | 0.0 | 14.83 | 0.0 | 0.0 |
| COMPONENT CC-3 | 0.0 | 0.0 | 3.19 | 0.0 | 0.0 | 0.0 | 17.63 | 0.0 |
| COMPONENT CC-4 | 0.0 | 0.0 | 0.0 | 3.19 | 0.0 | 0.0 | 0.0 | 17.63 |
| COMPONENT CD-1 | 7.86 | 7.91 | 7.86 | 7.86 | 6.69 | 6.92 | 6.69 | 6.69 |

# FIG. 20

(TEST 9)

| EQUIVALENT RATIO | TEST EXAMPLE 50 | TEST EXAMPLE 51 | TEST EXAMPLE 52 | TEST EXAMPLE 53 | TEST EXAMPLE 54 |
|---|---|---|---|---|---|
| COMPONENT CA-1 | 5.1 | 5.1 | 5.1 | 5.1 | 5.1 |
| COMPONENT CB-1 | 5.6 | 5.6 | 0.0 | 0.0 | 5.6 |
| COMPONENT CE-1 | 0.0 | 0.0 | 5.6 | 0.0 | 0.0 |
| COMPONENT CE-2 | 0.0 | 0.0 | 0.0 | 5.6 | 0.0 |
| COMPONENT CE-3 | 0.3 | 0.0 | 0.0 | 0.0 | 0.0 |
| COMPONENT CC-5 | 0.0 | 0.3 | 0.0 | 0.0 | 0.0 |

| MASS RATIO | TEST EXAMPLE 50 | TEST EXAMPLE 51 | TEST EXAMPLE 52 | TEST EXAMPLE 53 | TEST EXAMPLE 54 |
|---|---|---|---|---|---|
| COMPONENT CA-1 | 51.6 | 50.1 | 57.8 | 53.8 | 54.8 |
| COMPONENT CB-1 | 42.5 | 41.3 | 0.0 | 0.0 | 45.2 |
| COMPONENT CE-1 | 0.0 | 0.0 | 42.2 | 0.0 | 0.0 |
| COMPONENT CE-2 | 0.0 | 0.0 | 0.0 | 46.2 | 0.0 |
| COMPONENT CE-3 | 5.8 | 0.0 | 0.0 | 0.0 | 0.0 |
| COMPONENT CC-5 | 0.0 | 8.7 | 0.0 | 0.0 | 0.0 |

| (TEST 9) | TEST EXAMPLE 50 | TEST EXAMPLE 51 | TEST EXAMPLE 52 | TEST EXAMPLE 53 | TEST EXAMPLE 54 |
|---|---|---|---|---|---|
| EVALUATION A-1 | C | C | C | C | - |
| EVALUATION A-2 | C | C | C | C | - |
| EVALUATION A-3 | D | D | D | D | - |
| EVALUATION B-1 | B | B | C | B | - |
| EVALUATION B-2 | B | B | B | B | - |
| EVALUATION B-3 | B | B | C | C | - |
| EVALUATION C | B | C | C | C | A |

Europäisches Patentamt
European Patent Office
Office européen des brevets

# EUROPEAN SEARCH REPORT

Application Number
EP 25 20 6310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 556 093 A (MITSUBISHI CHEM CORP) 27 August 2024 (2024-08-27) | 12-14 | INV. B41J2/16 C08G59/24 C08G59/62 C08G59/68 C08K5/17 C08L63/00 C09J163/00 |
| Y | * the whole document * ----- | 1-11 | |
| Y | US 2006/207720 A1 (YOSHIZAWA TOMOMI [JP] ET AL) 21 September 2006 (2006-09-21) * the whole document * ----- | 1-11 | |

TECHNICAL FIELDS SEARCHED (IPC)

B41J
C08G
C08K
C08L
C09J

The present search report has been drawn up for all claims

1

| Place of search | Date of completion of the search | Examiner |
|---|---|---|
| The Hague | 16 February 2026 | Dewaele, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 6310

This annex lists the patent family members relating to the patent documents cited in the above-mentioned European search report. The members are as contained in the European Patent Office EDP file on The European Patent Office is in no way liable for these particulars which are merely given for the purpose of information.

16-02-2026

| Patent document cited in search report | Publication date | Patent family member(s) | Publication date |
|---|---|---|---|
| CN 118556093 A | 27-08-2024 | CN 118556093 A | 27-08-2024 |
| | | EP 4467588 A1 | 27-11-2024 |
| | | JP WO2023140256 A1 | 27-07-2023 |
| | | KR 20240134368 A | 09-09-2024 |
| | | TW 202340300 A | 16-10-2023 |
| | | US 2024368336 A1 | 07-11-2024 |
| | | WO 2023140256 A1 | 27-07-2023 |
| US 2006207720 A1 | 21-09-2006 | US 2006207720 A1 | 21-09-2006 |
| | | US 2010018647 A1 | 28-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024173301 A
- JP 2002155129 A


### Non-patent literature cited in the description


- *CHEMICAL ABSTRACTS*, 63738-22-7
- *CHEMICAL ABSTRACTS*, 28768-32-3
- *CHEMICAL ABSTRACTS*, 69178-41-2
- *CHEMICAL ABSTRACTS*, 499-75-2
- *CHEMICAL ABSTRACTS*, 123-07-9
- *CHEMICAL ABSTRACTS*, 3228-02-2
- *CHEMICAL ABSTRACTS*, 89-83-8
- *CHEMICAL ABSTRACTS*, 90-72-2
- *CHEMICAL ABSTRACTS*, 119-84-6
- *CHEMICAL ABSTRACTS*, 9046-10-0
- *CHEMICAL ABSTRACTS*, 19900-72-2
- *CHEMICAL ABSTRACTS*, 13750-62-4